# EUROPÄISCHE PATENTANMELDUNG

(11) **EP 3 693 698 A1**
(43) Veröffentlichungstag der Anmeldung: **12.08.2020**
(21) Anmeldenummer: 19155545.7
(22) Anmeldetag: 05.02.2019
(51) Int. Cl.: G01C 1/04, G01C 3/02, G01C 15/00

(54) **VERMESSUNGSGERÄT MIT EREIGNISBASIERTER KAMERA**

(71) Anmelder: Leica Geosystems AG, 9435 Heerbrugg (CH)
(72) Erfinder: TÖRÖK, Zoltán, CH-9442 Berneck (CH); GÄCHTER TOYA, Stefan Martin Benjamin, CH-9000 St. Gallen (CH); MÖRWALD, Thomas, A-6900 Bregenz (AT); HORNUNG, Ulrich, 9008 St. Gallen (CH)
(74) Vertreter: Kaminski Harmann

(57) **Zusammenfassung**

Vermessungsgerät (1, 1'), zum Beispiel Lasertracker, Totalstation, Laserscanner oder Vermessungsstab, mit einer ereignisbasierten Kamera (2, 20) mit Dynamic Vision Sensor (5). Die mit der Kamera (2, 20) detektierten Ereignisse werden herangezogen, um mittels Zielstrahlung (4) eine Richtung zu einem zu vermessenden Ziel (3, 13), z.B. einem Retroreflektor, zu bestimmen und/oder im Rahmen visueller Odometrie Kameraposen der Kamera (2, 20) zu bestimmen, beispielsweise zur Registrierung von dreidimensionalen Punktwolken und/oder Lagebestimmung des Vermessungsgeräts (1, 1'), z.B. eines die Kamera (2, 20) aufweisenden GNSSbasierten Vermessungsstabs (1').

## Beschreibung

Die Erfindung betrifft ein Vermessungsgerät mit ereignisbasierter Kamera nach dem Oberbegriff des Anspruchs 1 oder 8 und ein Verfahren nach Anspruch 4, 7 oder 14 für ein solches Vermessungsgerät.

Zum Vermessen eines oder mehrerer Zielpunkte sind zahlreiche Vermessungsgeräte bekannt. Allgemein bekannte moderne Beispiele für solche Vermessungsgeräte sind Lasertracker, also Messvorrichtungen, die für eine fortlaufende Verfolgung eines Zielpunkts und eine koordinative Positionsbestimmung dieses Punkts ausgebildet sind, oder speziell auf geodätische Vermessungen zugeschnittene Vermessungsgeräte wie Laserscanner, Tachymeter und Totalstationen. Letztere werden auch als elektronischer Tachymeter oder Computer-Tachymeter bezeichnet und weisen eine Reihe von verschiedenen Subsystemen zur hochgradig automatischen bzw. automatisierten Erfüllung der Vermessungsaufgaben auf. Ein geodätisches Vermessungsgerät des Stands der Technik ist beispielsweise in der EP 1686350 beschrieben. Als räumliche Standarddaten werden dabei Entfernung und Richtung bzw. horizontaler und vertikaler Winkel von einem Vermessungsgerät, dessen absolute Position bekannt ist, zum zu vermessenden Zielpunkt aufgenommen.

In vielen Anwendungen erfolgt eine Vermessung von Punkten, indem dort speziell ausgestaltete Ziele platziert oder auf einem beweglichen Fahrzeug montiert werden. Diese bestehen beispielsweise aus einem Lotstock mit einem Retroreflektor (z.B. einem Rundum-Prisma) zur Definition der Messtrecke bzw. des Messpunktes. Es sind aber auch reflektorlos arbeitende Vermessungssysteme möglich, wie sie beispielsweise in der europäischen Patentanmeldung mit der Anmeldenummer EP 10168771.3 beschrieben sind. Bekannt sind auch Vermessungsgeräte, welche über einen GNSS-Empfänger zur Positionsbestimmung verfügen.

Die bei einer Vermessung beispielsweise im Strassen- oder Tunnelbau geforderten Genauigkeiten liegen im Millimeterbereich auch auf grosse Entfernungen zwischen Vermessungsgerät und Zielpunkt (sog. Fernfeld) von etwa 100 Metern oder mehr mit entsprechend hohen Anforderungen an das Vermessungsgerät und gegebenenfalls an das retroflektierende Ziel, mit dem ein zu vermessender Zielpunkt markiert ist.

Zum Vermessen von Punkten weisen gattungsgemässe Vermessungsgeräte eine Anzieleinheit oder Strahllenkeinheit auf. Diese ist im Allgemeinen um eine vertikale Stehachse und um eine horizontale Kippachse relativ zu einer Basis des Messgeräts drehbar, so dass durch Schwenken und Kippen von der Strahllenkeinheit emittierte Messstrahlung auf einen zu vermessenden Punkt ausgerichtet werden kann. Anhand der mittels Winkelmesser bestimmten Ausrichtung der Strahllenkeinheit bzw. der Emissionsrichtung der Messstrahlung und der anhand der Messstrahlung, z.B. nach dem Laufzeit- oder Phasenmessprinzip bestimmten Entfernung zum Ziel ist somit die Position des Zielpunkts gemessen.

Alternativ oder zusätzlich zur Vermessung einzelner Punkte wird eine Vielzahl von Punkten vermessen, beispielsweise durch einen Scan mit Millionen von Punktvermessungen, wodurch eine sogenannten 3D-Punktwolke erzeugt wird. Häufig ist dabei zu einer vollständigen Vermessung eines Objekts, also zur Erzeugung einer 3D-Punktwolke, welche die Objektoberfläche lückenlos abbildet, erforderlich, das Objekt von mehreren Stationierungen aus zu vermessen. Die damit von zwei oder mehr Orten aus generierten Punktwolken müssen auf eine gemeinsame Basis bezogen werden (sog. Registrierung), was aufwändig ist und oft erst im Nachhinein erfolgen kann.

Zur Verknüpfung von unterschiedlichen Stationierungen bzw. Unterstützung der Registrierung mehrerer Punktwolken ist bekannt, visuelle Odometrie zu verwenden, um die Positions- und Orientierungsunterschiede zweier Stationierungen in einer Messumgebung zu ermitteln. Hierzu weist das Vermessungsgerät eine Standard-Kamera auf, mit welcher beim Stationierungswechsel fortlaufend eine Serie von Bildern aufgenommen wird, woraus sich algorithmisch, z.B. mit Hilfe eines sogenannten SLAM (simultaneous localization and mapping) oder SfM (structure from motion)-Algorithmus. Solche Methoden werden auch unabhängig von Punktwolkenregistrierung verwendet, um Position und/oder Orientierung eines Vermessungsgeräts zu ermitteln bzw. Bewegungen eines Vermessungsgeräts innerhalb einer Messumgebung zu verfolgen.

Problematisch hierbei ist, dass die Bildqualität herkömmlicher Kameras von photometrischen Effekten wie high dynamic range oder motion blur stark beeinträchtigt wird, besonders in schwach beleuchteten Messumgebungen wie Tunnel oder dem Inneren von Gebäuden. Durch mangelnde Bildqualität gelingt es mittels einem visuellen Odometrie-Algoritmus nicht, die Geräteposen korrekt oder mit ausreichender Genauigkeit zu ermitteln. Weitere Beeinträchtigungen der Odometrie-Messqualität sind durch übermässige Beleuchtung (z.B. starker Sonnenschein), schnelle oder starke Beleuchtungswechsel und schnelle oder ungleichmässige Bildszenenwechsel gegeben (zum Teil innerhalb weniger Sekunden oder noch schneller), welche z.B. im Freien und bei Bewegen des Vermessungsgeräts von einem Ort zum anderen durch einen Menschen häufig vorkommen.

Besonders zur Vermessung einzelner Ziele können Vermessungsgeräte, vor allem Lasertracker oder Totalstationen, ausgebildet sein zur automatischen Zielanvisierung/Feinanzielung und Zielverfolgung (target sighting/fine targeting bzw. target tracking), im Folgenden mit ATR (Automatic Target Recognition) abgekürzt. Eine Beschreibung eines solchen ATR-Systems findet sich z.B. in der Schrift von Kirschner, H. und Stempfhuber, W.: The Kinematic Potential of Modern Tracking Total Stations - A State of the Art Report on the Leica TPS1200+. 1st International Conference on Machine Control & Guidance 2008.

Die ATR-Systeme nach dem Stand der Technik weisen Mittel zur Emission eines Beleuchtungsstrahls auf und zur Erfassung zumindest eines Teils des von einem Ziel, z.B. einem Umgebungspunkt oder reflektierenden Prisma, rückgestrahlten Anteils des Beleuchtungsstrahls mittels einer ATR-Kamera. Alternativ wird derartige Zielstrahlung vom Ziel selbst mittels einer am Ziel angebrachten Strahlquelle emittiert. Das vom Ziel reflektierte oder emittierte Licht wird als Lichtfleck auf einem Photosensor, z.B. einem CMOS-2D-Chip, abgebildet.

Die Position oder Lage des Lichtflecks gibt Auskunft über die Richtung zum Ziel. Je nach Abweichung der Ausrichtung der optischen Anzielachse der Kamera von der Richtung zum Ziel weicht dabei auch die Auftreffposition der reflektierten Strahlung auf dem ATR-Sensor von einer zentralen Sensorflächenposition ab, d.h. der Lichtfleck der vom Ziel ausgehenden ATR-Zielstrahlung auf dem ATR-Flächensensor liegt nicht im Zentrum des ATR-Flächensensors und trifft somit nicht auf einer Soll-Position auf, die z.B. anhand Kalibrierung als jene mit der optischen Zielachse korrespondierende Position festgelegt wurde. Somit wird im Rahmen einer Feinanzielfunktion anhand der Lage des Reflexflecks bzw. der belichteten Pixel auf dem Bildsensor auf die Richtung des Ziels relativ zur optischen Anzielachse geschlossen.

Im Falle einer Abweichung wird mittels der Feinanzielfunktion üblicherweise motorisiert die Ausrichtung der Anzieleinheit oder Strahllenkeinheit derart geringfügig nachgestellt, dass der am Prisma retroreflektierte ATR-Messstrahl hochpräzise im Zentrum der Sensorfläche auf dem ATR-Flächensensor auftrifft, d.h. die Horizontal- und Vertikalwinkel der Visiereinrichtung werden derart iterativ geändert und angepasst, bis das Zentrum des Reflexflecks mit der Sollposition auf dem ATR-Flächensensor zusammenfällt.

Neben der ATR-Feinanzielfunktionalität kann auf ähnliche Weise und unter Verwendung derselben ATR-Komponenten auch eine automatische Zielverfolgungsfunktionalität bereitgestellt sein, wie dies vor allem bei Lasertrackern, aber auch modernen Totalstationen der Fall ist. Bei der Zielverfolgung wird die Position eines sich bewegenden Ziels kontinuierlich bzw. in sehr kleinen zeitlichen Abständen bestimmt. Die Messung/das Vermessungsgerät folgt der Verlagerung des Ziels. Es wird also die Anvisiereinrichtung derart Bewegungen des Zieles "live" und entsprechend schnell nachgeführt, dass das Zentrum des ATR-Reflexflecks weiterhin möglichst genau und stets auf der Soll-Position auf dem ATR-Flächensensor bleibt. Es wird dann oft von einem "Einlocken" auf das Ziel gesprochen bzw. davon, dass das Ziel "eingelockt" ist.

Zur Sicherstellung des Funktionierens der automatischen Feinanzielung bzw. des automatischen Trackings ist es erforderlich, vor Funktionsstart die Visiereinrichtung zumindest derart ungefähr auf das Ziel auszurichten, dass Zielstrahlung von der ATR-Kamera empfangbar ist bzw. auf dem ATR-Flächensensor auftrifft. Befinden sich mehr als ein mögliches Ziel in der Messumgebung, besteht hierbei das Problem, das tatsächlich erwünschte Ziel auszuwählen und ein fälschliches Ausrichten auf ein nicht gewünschtes Ziel zu vermeiden. Im Stand der Technik sind Lösungen zur Identifizierung eines Ziels bekannt, z.B. mittels eines Barcodes am Ziel, welcher mittels einer Überblickskamera abgebildet und ausgelesen wird. Nachteilig an derartigen bekannten Zielidentifizierungsmitteln ist allerdings, dass besonders bei grösseren Entfernungen ein sicheres Auslesen des Barcodes aufwändig bis unmöglich ist.

Als weiteres Verfahren zur Zielidentifikation ist bekannt, das Ziel mit mehreren LEDs auszustatten, welche ein zeitlich veränderliches Lichtmuster aussenden. Dieses Lichtmuster wird von einem Bildsensor eines positionssensitiven Detektors (PSD) abgebildet und mit einem gespeicherten Muster verglichen. Nachteilig an dieser Lösung ist zum einen der zusätzliche Aufwand an Leuchtmitteln und zum anderen die aufwändige Bildauswertung des vom Bildsensor bereitgestellten Bildes. Vor allem ist es mit diesem Verfahren nicht oder nur mit hohem Aufwand möglich, mehrere abgebildete Ziele bzw. Zielmuster auseinanderzuhalten und Störeinflüsse durch Fremdlichtquellen bzw. Fremdreflexionen auszuschalten bzw. auszublenden.

Fremdlichteinflüsse können dabei nicht nur das Erfassen bzw. Identifizieren des Ziels erschweren oder verhindern, sondern auch dazu führen, dass statt des Ziels die Fremdlichtquelle bzw. deren Reflexion fälschlicherweise eingelockt wird. Solche Fremdreflexe sind verursacht durch fremde Licht- bzw. Strahlquellen wie direkte oder indirekte, also von Strassenschildern oder Glasflächen reflektierte, Sonneneinstrahlung oder Scheinwerfer von Baufahrzeugen. Besonders bei der Zielverfolgung sind Störungen problematisch, da diese häufig zum Verlust des Einlockens auf den Zielreflex führen, was ein zeitaufwändiges erneutes Einlocken erforderlich macht.

Die WO 1997/10517 A1 offenbart ein Zielerkennungsverfahren mit Modulierung der Polarisation des ausgesandten Lichts. Nachteilig hierbei ist der zusätzliche Aufwand zur Polarisierung, u.a. in Form von Polarisationsmitteln, die zudem zumindest teilweise am Zielreflektor angeordnet sein müssen, so dass herkömmliche Retroreflektoren nicht verwendet werden können. Die WO 2011/098131 verwendet eine Vorrichtung mit zwei unterschiedlich angeordneten Strahlungsquellen und mindestens zwei Bildsensoren, wobei anhand der Signale der Bildsensoren bei Beleuchtung mit reflektiertem Licht der ersten Strahlungsquelle und der Signale bei Beleuchtung mit reflektiertem Licht der zweiten Strahlungsquelle eine Unterscheidung von Reflexen erfolgt. Nachteilig ist auch hier wieder der zusätzliche Aufwand an Mitteln, diesmal in Form der zusätzlichen Lichtquelle und Bildsensoren.

Ein weiteres Problem liegt vor, wenn sich das Ziel derart ruckartig und schnell bewegt, dass es aus dem Sichtbereich des ATR-Detektors verschwindet (d.h. keine am Ziel reflektierte ATR-Messstrahlung mehr auf dem ATR-Flächensensor auftrifft). Das in einem Bild noch aufgenommene Ziel ist bei nachfolgender Aufnahme eines weiteren Bilds bereits ausserhalb des Blickfelds der Kamera, so dass in diesem weiteren Bild kein Lichtfleck der Zielstrahlung mehr vorhanden ist. Da die Belichtungsdauer bzw. der zeitliche Abstand zwischen zwei Bildaufnahmen nicht beliebig verkürzbar ist -d.h. aufgrund der nach unten begrenzten Framerate oder Bildfrequenz der ATR-Kameras des Stands der Technik- tritt dieses Problem vor allem bei sich sehr schnell bewegenden Zielen und/oder im Nahbereich auf.

Aufgabe der vorliegenden Erfindung ist deshalb, ein Vermessungsgerät und Vermessungsverfahren mit verbesserter automatischer Feinanzielungs- und Zielverfolgungsfunktionalität bereitzustellen.

Eine weitere Aufgabe der vorliegenden Erfindung ist die Bereitstellung eines Vermessungsgeräts und Vermessungsverfahrens mit verbesserter Zielidentifikation.

Eine weitere Aufgabe der vorliegenden Erfindung ist die Bereitstellung eines verbesserten Vermessungsgeräts und Verfahrens, mit dem mittels visueller Odometrie Position und/oder Orientierung bzw. deren Veränderung des Vermessungsgeräts bestimmbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Die Erfindung betrifft gemäss eines ersten Aspekts ein Vermessungsgerät, z.B. ausgebildet als Totalstation, Theodolit oder Tachymeter oder Lasertracker, ausgebildet zur Bestimmung der Position eines Ziels mit Bezug zu einem inneren Koordinatensystem, mit einer Kamera mit einem positionssensitiven Pixel-Array-Sensor zum Empfang und zur Detektion von vom Ziel retro-reflektierter oder emittierter optischer Zielstrahlung, wobei anhand einer ermittelten Position der detektierten Zielstrahlung auf dem Pixel-Array eine Richtung zum Ziel bestimmbar ist.

Die Kamera ist ausgebildet als ereignisbasierte Kamera, so dass für ein jeweiliges Pixel des Pixel-Arrays ein Ereignis als eine Änderung empfangener Licht- oder Strahlungsintensität detektierbar ist. Optional wird dabei eine Helligkeitsänderung dann als Ereignis detektiert, wenn diese einen bestimmten Intensitätsschwellwert übersteigt, also z.B. detektierte Zielstrahlung sich mindestens um einen definierten Wert ändert.

Optional ist das Vermessungsgerät ausgebildet, anhand einer mittels des Sensors ermittelten Phasendifferenz und/oder Laufzeit der detektierten Zielstrahlung eine Entfernung zum Ziel zu bestimmen. Beispielsweise wird also eine im Vergleich zur endgültigen oder eigentlichen Positionsbestimmung grobe oder ungefähre Distanz zum Ziel anhand der mittels der ereignisbasierten Kameradetektierten Zielstrahlung ermittelt.

In einer bevorzugten Fortbildung weist das Vermessungsgerät eine Identifizierungsfunktionalität auf, bei deren Ausführung Zielstrahlung und damit das Ziel anhand eines Prüfkriteriums identifiziert wird. Beispielsweise erfolgt eine Identifikation, indem eine Abfolge detektierter Ereignisse auf Übereinstimmung mit einer hinterlegten Ereignisabfolge und/oder Zugehörigkeit zu einer Ereignisabfolgeklasse geprüft wird. Beispielsweise wird eine Intensitätsmodulation der Zielstrahlung, welche mittels der Ereignisdetektion erfasst wird (z.B. einer Modulation, welche zwischen schwellwertübersteigender und schwellwertunterschreitender Intensität wechselt), mit einem vorbekannten Modulationsmuster verglichen, so dass Zielstrahlung von Umgebungsstrahlung und/oder Zielstrahlung unterschiedlicher Ziele unterschieden wird.

Optional ist der Sensor als Dynamic Vision Sensor (DVS) und/oder für eine Ereignisdetektionsrate oder Messrate von wenigstens 1 kHz ausgebildet und/oder der Sensor deckt ein Sichtfeld von mindestens 1.5°, beispielsweise 20°, insbesondere mindestens 180°, ab.

Optional weist das Vermessungsgerät eine Basis auf sowie einer Strahllenkeinheit zur Emission einer Messstrahlung, insbesondere Laserstrahlung, und zum Empfang von zumindest einem Teil der am Ziel reflektierten Messstrahlung, wobei die Strahllenkeinheit um zwei Achsen relativ zur Basis motorisiert schwenkbar ist und durch eine Emissionsrichtung der Messstrahlung eine Zielachse definiert ist. Weiter weist in dieser Option das Gerät eine Feindistanzmesseinheit zur Distanzbestimmung zum Ziel vermittels der Messstrahlung auf sowie eine Winkelmessfunktionalität zur Bestimmung einer Ausrichtung der Strahllenkeinheit relativ zur Basis (Ausrichtung der Zielachse), so dass anhand der bestimmten Distanz und Ausrichtung die gesuchte Zielposition ermittelbar ist. Anhand der mittels des Sensors bestimmten Richtung zum Ziel ist die Strahllenkeinheit derart verschwenkbar, dass emittierte Messstrahlung zentral auf das Ziel trifft. Dabei weist als weitere Option die Strahllenkeinheit eine Zielstrahlungsquelle zur Emission der Zielstrahlung auf, d.h. das Ziel wird vom Vermessungsgerät mit Zielstrahlung beleuchtet.

Die Erfindung betrifft zudem ein Verfahren zum Bestimmen einer Richtung zu einem Ziel, wobei das Verfahren ein Empfangen von vom Ziel retro-reflektierter oder emittierter modulierter optischer Zielstrahlung mit einer ereignisbasierten Kamera eines Vermessungsgeräts (z.B. einer Totalstation oder ein Lasertracker), wobei die Kamera einen, beispielsweise als Dynamic Vision Sensor ausgebildeten, positionssensitiven Sensor mit einem Pixel-Array aufweist und Detektieren von Ereignissen als, insbesondere einen definierten Schwellwert übersteigende, Änderungen einer empfangenen Strahlungsintensität mittels des Pixel-Arrays beinhaltet.

Vorzugsweise beinhaltet das Verfahren weiter ein Identifizieren der Zielstrahlung bzw. des Ziels anhand von detektierten Ereignissen, welche von einer Modulation der Zielstrahlung verursacht sind, und Bestimmen der Richtung zum Ziel mittels Ermitteln einer Position der detektierten Zielstrahlung auf dem Pixel-Array. Modulieren wird hierbei breit verstanden und umfasst z.B. auch eine (gezielte) Veränderung der Ausbreitungsrichtung der Zielstrahlung.

In einer Fortbildung erfolgt das Modulieren beim Emittieren der Zielstrahlung, zum Beispiel indem gepulste Zielstrahlung erzeugt wird, und/oder das Modulieren erfolgt beim Reflektieren der Zielstrahlung durch das Ziel, beispielsweise durch zeitweises Unterbrechen des Reflektierens, im Speziellen mittels eines Shutters des Ziels und/oder Verändern der Zielstrahlungsrichtung, z.B. gezieltes Schwenken des Ziels, so dass ein Bewegungs-/Richtungsmuster entsteht. Ein derartiges Schwenkmuster als Form der Zielstrahlungsmodulation kann nicht nur mit einem reflektierenden, sondern auch mit einem selbstleuchtenden Ziel erzeugt werden.

Optional erfolgt zum Identifizieren der Zielstrahlung ein Überprüfen auf Übereinstimmen mit einer hinterlegten Ereignisabfolge und/oder Zugehörigkeit zu einer Ereignisabfolgeklasse. Beispielsweise erfolgt ein Vergleichen einer detektierten Ereignisabfolge mit einem vorbekannten, die Modulation repräsentierenden Muster.

Als weitere Option wird mittels Bestimmen einer Phasendifferenz und/oder Laufzeit der vom Sensor detektierten Zielstrahlung eine Entfernung zum Ziel geschätzt.

In einer weiteren Fortbildung wird zum Bestimmen der Position auf dem Pixel-Array ein Bild wenigstens eines Zielstrahlung repräsentierenden Lichtflecks erzeugt mittels zeitlichem Integrieren detektierter Ereignisse und durch pixelweises Erfassen der zeitlich integrierten detektierten Ereignisse der Zielstrahlung, wobei als Position z.B. ein Zentrum des Lichtflecks bestimmt wird. Das Integrieren erfolgt dabei optional bereits auf der (Auswerte-)Ebene des Sensors, nicht erst in einer dem Sensor nachgeschalteten Auswertestufe. Es erfolgt bei dieser Option ein Auslesen eines Intensitätsbilds.

Als Option erfolgt im Rahmen des Verfahrens mittels fortwährendem Ermitteln der Richtung eine Zielverfolgung eines sich bewegenden Ziels und Verändern einer Ausrichtung der Ereigniskamera basierend auf der ermittelten Richtung, insbesondere wobei im Rahmen der Zielverfolgung ein Schätzen der Geschwindigkeit des Ziels erfolgt.

Optional erfolgt im Rahmen des Verfahrens ein Bestimmen einer Ausrichtung (relative Orientierung) eines mehrere, in fixer Positionsrelation zueinander angeordneter Ziele aufweisenden Messhilfsinstruments, basierend auf den detektierten Positionen der jeweiligen Zielstrahlung der einzelnen Ziele des Messhilfsinstruments.

Als alternatives Verfahren zum Bestimmen einer Richtung zu einem Ziel erfolgt ein Bewegen oder Verschwenken des Ziels gemäss eines vordefinierten Bewegungsmusters, Empfangen von vom Ziel ausgehenden Lichts mit einer ereignisbasierten Kamera eines Vermessungsgeräts, z.B. Totalstation, Theodolit oder Tachymeter oder Lasertracker, wobei die Kamera einen positionssensitiven Sensor mit einem Pixel-Array aufweist, Detektieren von Ereignissen als, insbesondere einen definierten Schwellwert übersteigende, Änderungen empfangener Lichtintensität mittels des Pixel-Arrays, Identifizieren des Ziels anhand von Ereignissen, welche durch das vordefinierte Bewegungsmuster des Ziels hervorgerufenen Lichtintensitätsänderungen entsprechen, und Bestimmen der Richtung zum Ziel mittels Ermitteln einer Position der detektierten Bewegungsmuster-Ereignisse auf dem Pixel-Array.

Gemäss diesem alternativen Verfahren erfolgt also mit Ereignissen eine Zielidentifizierung, welche auf Lichtvariation beruhen, die durch ein eindeutig bestimmtes Zielbewegen gemäss einem bekannten Muster hervorgerufen sind. Als Lichtquelle dient dabei z.B. das normale Umgebungslicht, welches durch das Ziel in Richtung der Kamera gespiegelt oder gestreut wird. Somit kann bei dieser Alternative auf eine gesonderte Zielstrahlung verzichtet werden.

In einem weiteren Aspekt betrifft die Erfindung ein mobiles Vermessungsgerät mit wenigstens einem Kameramodul und einem Computer mit Visueller-Odometrie-Funktionalität, bei deren Ausführung mittels eines gespeicherten, insbesondere SLAM- oder SfM-basierten, Algorithmus zur visuellen Odometrie eine während einer Bewegung des Vermessungsgeräts entlang eines Weges in einer Messumgebung vom Kameramodul in verschiedenen Kameraposen aufgenommenen Serie von Bildern derart ausgewertet werden, dass zumindest ein Teil der Kameraposen bestimmt wird.

Das Kameramodul weist einen Dynamic Vision Sensor (DVS) auf, so dass für ein jeweiliges Pixel eines Pixel-Arrays des Dynamic Vision Sensors ein Ereignis als eine, insbesondere einen definierten Schwellwert übersteigende, Änderung empfangener Lichtintensität detektierbar ist. Weiter erfolgen im Rahmen der Funktionalität während der Bewegung zusätzlich zur Aufnahme der Bilderserie ein Detektieren von Ereignissen und mittels des Algorithmus ein Bestimmen von Kameraposen unter Heranziehung detektierter Ereignisse. Es werden also Kameraposen basierend auf Auswertung von Kamerabildern und detektierten Ereignissen ermittelt.

Optional ist der Dynamic Vision Sensor auch zur Aufnahme der Bilder im Rahmen der Funktionalität ausgebildet und vorgesehen, er wird also dual zur Ereignisdetektion und zur Aufnahme der Bilderserie verwendet.

In einer Fortbildung erfolgt im Rahmen der Funktionalität mittels des Algorithmus basierend auf einer SLAM- oder SfM-Auswertung anhand detektierter Ereignisse (entweder allein mittels detektierter Ereignisse oder mit detektierten Ereignissen als zusätzliche Datenquelle) ein Identifizieren einer Vielzahl korrespondierender Bildpunkte in jeweiligen Untergruppen der Bilderserie und basierend auf Rückwärtsschnitt und Vorwärtseinschneiden anhand der jeweiligen korrespondierenden Bildpunkte das Bestimmen der Kameraposen erfolgt.

Optional wird im Rahmen der Funktionalität ein erstes Bild der Bilderserie als Referenzbild aufgenommen, dessen Pose relativ zur/in Bezug auf die Messumgebung bekannt ist, anhand detektierter Ereignisse ein Satz von Referenzbildpunkten erstellt, welche im Referenzbild und wenigstens einem weiteren Bild der Bilderserie vorkommen, und das Bestimmen von Kameraposen relativ zur Messumgebung erfolgt anhand der Satzes von Referenzbildpunkten.

Als weitere Option erfolgt im Rahmen der Funktionalität ein Bündelausgleich unter Heranziehung detektierter Ereignisse. In einer Fortbildung erfolgt im Rahmen der Funktionalität ein Verfolgen von Bildmerkmalen (feature tracking) in Bildern der Bilderserie, wobei das Verfolgen von Bildmerkmalen anhand detektierter Ereignisse erfolgt. Als weitere Option wird im Rahmen der Funktionalität anhand detektierter Ereignisse eine Bewegungsgrösse (z.B. Beschleunigung und/oder Geschwindigkeit) des Kameramoduls ermittelt.

Optional erfolgt im Rahmen der Funktionalität ein Bestimmen einer Position und/oder Orientierung des Vermessungsgeräts basierend auf wenigstens einem Teil der Kameraposen erfolgt. Die Lagebestimmung erfolgt z.B. direkt oder ausschliesslich mittels der Kameraposen oder diese werden zur Genauigkeitsverbesserung oder interpolierend zur Überbrückung verwendet.

Optional erfolgt im Rahmen der Funktionalität ein Aufnehmen einer ersten 3D-Punktwolke, insbesondere mittels Laserscannen, und wenigstens eines ersten Bildes der Bilderserie an einem ersten Wegpunkt, wobei die erste 3D-Punktwolke und das erste Bild wenigstens sich teilweise überlappende Ausschnitte der Messumgebung abbilden, so dass die erste 3D-Punktwolke und das erste Bild aufgrund des Überlapps räumlich verknüpfbar sind. Weiter erfolgt ein Aufnehmen einer zweiten 3D-Punktwolke und wenigstens eines zweiten Bildes der Bilderserie an einem zweiten Wegpunkt, wobei die zweite 3D-Punktwolke und das zweite Bild wenigstens sich teilweise überlappende Ausschnitte der Messumgebung abbilden. Schliesslich erfolgt ein Registrieren der ersten und der zweiten 3D-Punktwolke relativ zueinander anhand der bestimmten Kameraposen wenigstens des ersten und zweiten Bilds.

Als Option weist das Vermessungsgerät einen thermischen Bildsensor, einen inertiale Messeinheit und/oder einen elektronischen Distanzmesser auf, und das Bestimmen von Kameraposen erfolgt im Rahmen der Funktionalität unter Heranziehung von Messdaten des thermischen Bildsensors, der inertialen Messeinheit und/oder des elektronischen Distanzmessers.

Optional erfolgt im Rahmen der das Aufnehmen der Bilder mit einer Bildrate erfolgt und das Detektieren von Ereignissen mit einer Detektionsrate, welche mindestens 100mal so gross ist wie die Bildrate.

Als Option ist das Vermessungsgerät ausgebildet als Laserscanner, Totalstation, Theodolit oder Tachymeter oder Lasertracker und/oder es weist eine Basis auf sowie eine Strahllenkeinheit zur Emission einer Messstrahlung, insbesondere Laserstrahlung, und zum Empfang von zumindest einem Teil der an einem Ziel reflektierten Messstrahlung, wobei die Strahllenkeinheit um zwei Achsen relativ zur Basis motorisiert schwenkbar ist. Daneben weist das Gerät eine Feindistanzmesseinheit zur Distanzbestimmung zum Ziel vermittels der Messstrahlung auf und eine Winkelmessfunktionalität zur Bestimmung einer Ausrichtung der Strahllenkeinheit relativ zur Basis, so dass anhand der bestimmten Distanz und Ausrichtung eine Zielposition ermittelbar ist. Als weitere Option ist dabei das Vermessungsgerät ausgebildet zur Ausführung des oben beschriebenen Verfahrens zum Bestimmen einer Richtung zu einem Ziel.

Alternativ ist das Vermessungsgerät ausgebildet als Vermessungsstab, insbesondere mit GNSS-Empfänger. Mit derartigen Vermessungsstäben werden z.B. zu vermessende oder abzusteckende Geländepunkte kontaktiert.

Die Erfindung betrifft darüber hinaus gemäss des zweiten Aspekts ein Verfahren zur visuellen Odometrie mit einem mobilen Vermessungsgerät, insbesondere einem Laserscanner, Totalstation, Theodolit oder Tachymeter, Lasertracker oder Vermessungsstab, wobei im Rahmen des Verfahrens ein Bewegen des Vermessungsgeräts entlang eines Weges erfolgt sowie ein Aufnehmen einer Serie von Kamerabildern mittels des Vermessungsgeräts während der Bewegung in verschiedenen Kameraposen und ein Bestimmen wenigstens eines Teils der Kameraposen, welche Position und Orientierung der Kamera repräsentieren, anhand wenigstens eines Teils der Kamerabilder der Bilderserie.

Weiter erfolgt ein Detektieren von Ereignissen mittels eines Dynamic Vision Sensors des Vermessungsgeräts, wobei ein Ereignis eine, insbesondere einen definierten Schwellwert übersteigende, Änderung mittels des Dynamic Vision Sensors empfangener Lichtintensität ist, und ein Heranziehen wenigstens eines Teils der detektierten Ereignisse zum Bestimmen der Kameraposen.

Zudem betrifft die Erfindung ein Computerprogrammprodukt mit Programmcode, der auf einem maschinenlesbaren Träger, insbesondere eines erfindungsgemässen Vermessungsgeräts, gespeichert ist, oder Computer-Daten-Signal zur Durchführung eines jeweiligen oder aller erfindungsgemässen Verfahren.

Die erfindungsgemässen Vermessungsgeräte und die erfindungsgemässen Verfahren werden nachfolgend anhand von den in den Zeichnungen schematisch dargestellten Ausführungen und Anwendungsvorgängen näher beschrieben.

Im Einzelnen zeigen
- Fig.1: schematisch ein erfindungsgemässes Vermessungsgerät und ein von diesem beleuchtetes Ziel,
- Fig.2: ein Beispiel für ein Schätzen einer Entfernung zum Ziel,
- Fig.3: ein Beispiel für ein Unterscheiden mehrerer Ziele,
- Fig.4: ein Beispiel für ein Erfassen eines sich bewegenden Ziels,
- Fig.5: ein Beispiel für ein weiteres, als Vermessungsstab ausgebildetes Vermessungsgerät,
- Fig. 6: ein Beispiel für visuelle Odometrie mittels des Vermessungsgeräts, und
- Fig. 7: ein weiteres Anwendungsbeispiel für ein erfindungsgemässes Odometrie-Verfahren.

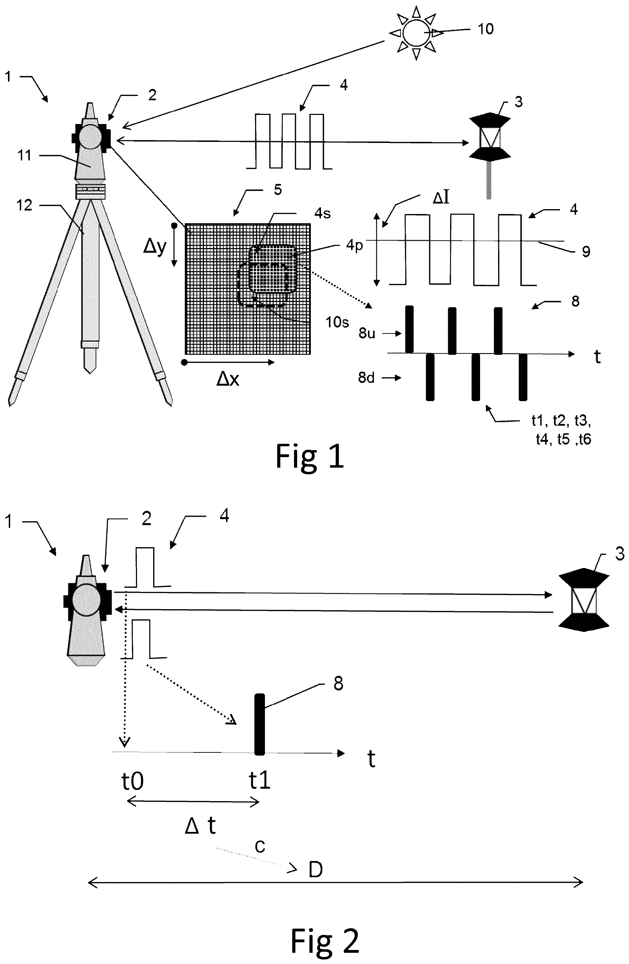

Figur 1 zeigt ein beispielhaftes Vermessungsgerät 1, beispielsweise ausgebildet als automatisierte Totalstation oder Lasertracker, mit welchem eine Position eines Ziels 3 bestimmbar ist, z.B. indem eine (nicht dargestellte) Laserquelle als erste Strahlquelle einen Messstrahl auf das Ziel 3 emittiert, wodurch bspw. nach dem Time-of-Flight-Methode eine Entfernung zum Ziel 3 bestimmbar ist, so dass bei bekannter bzw. gemessener Emissionsrichtung die Koordinaten des Ziels 3 relativ zum internen Bezugssystem des Vermessungsgerät 1 bestimmbar sind. Das Vermessungsgerät 1 weist eine nicht dargestellte Steuer- und Auswerteeinheit auf und eine gegenüber einer Basis 12 um zwei Achsen verschwenkbare Anzieleinrichtung oder Strahllenkeinheit 11 mit einer Objektiveinheit, beispielsweise einem Zielfernrohr oder einem Teleskop, und eine ATR-Kamera, welche auf das Ziel 3 ausgerichtet ist. Zur unten beschriebenen Zielstrahlungserfassung ist allerdings ein Verschwenken der Anzieleinrichtung 11 bzw. der Kamera an sich nicht erforderlich. Das Zielobjekt 3 ist beispielsweise als ein Reflektor, insbesondere als ein reflektierendes Prisma, ausgebildet.

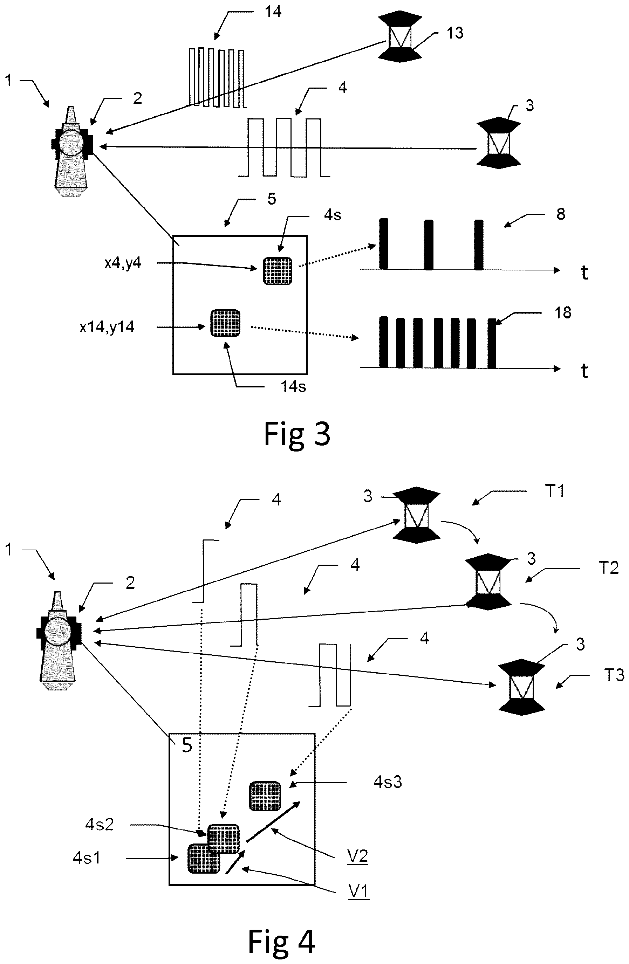

Das Vermessungsgerät 1 ist mit einer zweiten Strahlquelle, z.B. einer Laserlicht- oder IR-Quelle, zur Aussendung eines modulierten - im Beispiel gepulsten- Zielbeleuchtungsstrahls 4 auf den Reflektor 3 ausgestattet, von wo die Zielstrahlung 4 in Richtung der Zielkamera 2 zurück reflektiert und von dieser empfangen wird (natürlich vorausgesetzt, das Ziel 3 befindet sich im Field-of-View der Kamera 2). Alternativ weist das Ziel 3 selbst eine Lichtquelle auf (nicht dargestellt), welche derartige von der Kamera 2 empfangbare modulierte Zielstrahlung 4 emittiert. Die Kamera 2 ist mit einem ortsauflösenden Detektor bzw. photosensitiven Sensor ausgestattet. Vermessungsgerät 1 bzw. Kamera 2 und Ziel 3 können dabei beide in Ruhe verharren (der Fall eines sich bewegenden Ziels 3 wird im Zusammenhang mit Figur 4 weiter unten ausführlich beschrieben).

Die Kamera 2 ist als ereignisbasierte Kamera (event camera) ausgebildet, mit einem dynamic vision-Sensor 5 (DVS) als Detektor, welcher in der Figur 1 vergrössert neben dem Gerät 1 dargestellt ist. Dieser Sensor 5 weist ein Pixel-Array auf (symbolisiert durch das Gittermuster), wobei für ein jedes Pixel eine Änderung ΔI der auf dieses Pixel auftreffenden Lichtintensität registriert wird, sobald diese Änderung ΔI einen definierten Schwellwert 9 überschreitet.

Im Beispiel werden solche Intensitätsänderungen ΔI durch den reflekierten Zielbeleuchtungsstrahl 4 (fortwährend) ausgelöst, da die Zielstrahlung 4 gepulst ist. Somit werden die Zielstrahlungspulse 4 als Ereignisse 8 detektiert. Die Messrate des Sensors 5 ist dabei mit einer Frequenz im Kilohertzbereich, z.B. 5 oder 10 khZ, vorteilhaft derart hoch, dass den einzelnen Lichtpulsen gefolgt werden kann, die Pulse 4 also jeweils als ein Ereignis 8 auflösbar sind. Genauer ausgedrückt wird, wie im Beispiel ersichtlich, ein jeweiliger Puls sogar als zwei Ereignisse 8u, 8d aufgelöst. D.h. einem einzelnen Puls wird kann mittels des erfindungsgemässen Sensors 5 eine doppelte Information entnommen werden, so dass z.B. für eine gewünschte zeitliche Auflösung eines halb so grosse Pulsrate ausreichend ist.

Als (nicht dargestellte) Alternative werden als Ereignis detektierbare und zielidentifizierungsfähige Intensitätsänderungen ΔI erzeugt, indem das Ziel 3 eine musterhafte Bewegung ausführt, welche zu einer definierten Lichtmodulation auf dem Pixel-Array führt. Beispielsweise weist das Ziel 3 eine oder mehrere Zielstrahlungsquellen auf, welche gemäss einem definierten Muster bewegt werden, so dass aufgrund der Positionsänderungen Intensitätsänderungen (z.B. Lichtmodulation in Form von Lichtverschiebungen) auf dem Pixel-Array erfolgen, die als Ereignisse vom Sensor 5 detektierbar sind.

Als weitere Alternative werden mittels Umgebungslicht durch eine definierte Bewegung des Ziels 3 vorbekannte Intensitätsänderungen auf dem Pixel-Array ausgelöst. Beispielsweise ist das Ziel 3 als eine helle oder spiegelnde Scheibe ausgebildet und wird von einem Benutzer in einem Bewegungsmuster verschwenkt, so dass dadurch vom Sensor 5 Ereignisse detektiert werden, deren zeitlicher und örtlicher Verlauf eindeutig dem Ziel 3 zuordenbar sind.

Im Beispiel trifft Zielstrahlung 4 auf einen Bereich 4s des Pixel-Arrays auf. Bei allen innerhalb dieses Bereichs 4s gelegenen Pixeln wird somit die modulierte Zielstrahlung 4 als Ereignisse 8 detektiert. Beispielhaft ist dies für ein Pixel 4p illustriert. Entsprechend zur Intensitätsänderung ΔI, die jeweils einen Schwellwert 9 übertrifft (der Einfachheit halber in der Figur nur betragsmässig illustriert), werden für diesen Pixel 4p Ereignisse 8 ausgegeben. Diese sind im Beispiel zudem mit ihrem jeweiligen Ereigniszeitpunkt t1, t2,... oder t6 versehen sowie mit der Art der Änderung, also unterschieden nach Ereignissen 8u aufsteigender Intensität (positive Änderung) und Ereignissen 8d absteigender Intensität (negative Änderung). Es wird also als Ereignis Polarität, Zeitpunkt und Adresse (Pixelkoordinate) der Helligkeitsänderung festgestellt. Optional kann dabei für jede Polarität ein unterschiedlicher Schwellwert festgelegt sein.

Im Unterschied zur ereignisauslösenden gepulsten Zielstrahlung 4 wird Fremdstrahlung, welche im Beispiel von einem Leuchtobjekt 10 (z.B. Sonne) kontinuierlich abgestrahlt wird, nicht detektiert. Im Beispiel trifft dieses Nicht-Ziellicht zwar auf einem Bereich 10s des Sensors 5 auf. Da jedoch damit keine Intensitätsänderungen verbunden sind (oder nur derart geringfügige, dass diese unter dem Schwellwert 9 liegen), wird aufgrund dieser unerwünschten Strahlung 10 vom Sensor 5 keinerlei Ausgangs- oder Detektionssignal erzeugt, die Fremdstrahlung also nicht sensorisch erfasst.

Die verwendete ereignisbasierte Kamera bzw. die verwendete Methode der Lichtregistrierung ermöglicht also vorteilhaft, von vorneherein Fremdlichteinflüsse auszuschalten. Diese müssen nicht erst nach herkömmlichen Verfahren aus den Detektionen (quasi im Nachhinein) aussortiert werden, sondern werden erst gar nicht detektiert. Im Gegensatz dazu wird vorteilhaft Zielstrahlung 4 von Störeinflüssen getrennt, Zielstrahlung 4 aufgrund ihrer Intensitätsmodulation erfasst, dies, ohne das hierzu irgendwelche weiteren Massnahmen notwendig sind.

Als weitere Vorteile weist die ereignisbasierte Kamera 2 im Gegensatz zu herkömmlichen Vermessungsgerätekameras ein wesentlich verringertes Datenaufkommen auf (da nicht fortwährend komplette Bilder aufgenommen, sondern nur etwaige Änderungen registriert werden bzw. keine vollständigen Bilder prozessiert werden müssen, sondern nur einzelne Pixel) sowie eine wesentlich verringerte Leistungsaufnahme. Der geringere Signalverarbeitungsbedarf bzw. Datenausstoss und geringere Strombedarf ist vor allem bei den gattungsgemässen mobilen (und damit batteriebetriebenen) Vermessungsgeräten 1 wie Lasertracker oder Totalstationen wichtig, die üblicherweise hinsichtlich Datenverarbeitung und -transfer eingeschränktes Potential aufweisen.

Zur Bestimmung der Position der Zielstrahlung 4 auf dem Sensor 5 -und damit der Richtung vom Vermessungsgerät 2 zum Ziel 3 bzw. einer Abweichung der Ausrichtung des Geräts 2 von einer idealen Ausrichtung zum Ziel 3- erfolgt ein Integrieren der Ereignisse 8 über einen bestimmten Zeitraum. Somit lässt sich z.B. der Abstand Δy und Δx von einem Sensornullpunkt (im Beispiel ist der Nullpunkt die linke obere Ecke des Pixel-Arrays) bestimmen, so dass die Ausrichtung der Kamera 2 bzw. einer Zielachse des Vermessungsgeräts 2 gemäss des Abstands Δy, Δx verändert werden kann, damit die Zielstrahlung 4 zentral auf den Nullpunkt auftrifft. Bei einem sich bewegenden Ziel 3 kann so in an sich bekannter Weise eine Zielverfolgung oder Tracking erfolgen.

Alternativ zu einer Ereignisintegration ist der Sensor 5 ausgebildet, neben den Intensitätsänderungen oder Ereignissen 8 auch (absolute) Intensitätswerte zu bestimmen. Dies kann mit einer Messrate von beispielsweise 30Hz, also mit wesentlich geringerer Messrate als die Ereignismessrate erfolgen bzw. mit einer im Vergleich zum Stand der Technik wesentlich verringerten Messrate, da die ereignisbasierte Detektion für eine ausreichend hohe oder im Vergleich zum Stand der Technik sogar gesteigerte zeitliche Auslösung sorgt. Aufgrund der Intensitätswerte kann somit die Zielstrahlung 4 als geometrische Form abgebildet werden, deren Lage die gesuchte Auftreffposition angibt, z.B. als Zentrum eines abgebildeten kreisförmigen Lichtflecks.

Figur 2 zeigt schematisch, wie die vergleichsweise hohe Messsrate der ereignisbasierten Kamera 2 bzw. des dynamic vision Sensors 5 weiter vorteilhaft genutzt wird. Mittels der ereignisbasierten Kamera 2 lässt sich -aufgrund deren Messfrequenz im Kilohertzbereich- nicht nur eine Richtung zum Ziel 3 bestimmen, sondern auch eine Entfernung D zum Ziel 4 bestimmen bzw. schätzen. Im Beispiel erfolgt dies nach dem an sich bekannten Laufzeitprinzip (Time of Flight). Beim Emittieren eines Zielstrahlungspulses 4 wird eine Startzeit t0 getriggert und beim Detektieren des Pulses 4 als Ereignis 8 wird eine Stoppzeit t1 getriggert. Unter Kenntnis der Lichtgeschwindigkeit c ist aus der Zeitdifferenz Δt=t1-t0 die Entfernung D grob bestimmbar. Alternativ oder zusätzlich erfolgt eine Entfernungsschätzung durch Bestimmen einer Phasendifferenz mittels des Sensors 5.

Vor allem kann mit einer solchen Grobbestimmung der Entfernung zum Ziel erkannt werden, ob sich das Ziel 3 im Nah- oder Fernbereich der Messumgebung befindet. Dies lässt sich z.B. nutzen, um Messparameter der eigentlichen, hochgenauen Laser-Entfernungsmessung automatisch einzustellen, so dass z.B. ein Ziel 3 im Fernfeld automatisch mit für diese Messreichweite optimalen Parametern -beispielsweise des Entfernungsmesslasersvermessen wird.

Auch kann damit die Robustheit der ATR-Zielfindung verbessert werden. Neben Störlichtquellen (siehe Figur 1) sind nämlich auch mehrere Ziele 3 in der Messumgebung problematisch, wenn diese für das Vermessungsgerät 1 nicht unterscheidbar sind, weswegen ein versehentliches Einlocken auf ein falsches, momentan nicht gewünschtes Ziel 3 erfolgen kann. Mittels der Entfernungsschätzung können zumindest Ziele 3 im Fernfeld von solchen im Nahfeld unterschieden werden.

Zur weiteren Steigerung der Robustheit der Messung auf Zielstrahlung 4 erfolgt optional ein Identifizieren von Zielstrahlung 4 dahingehend, dass ein Überprüfen erfolgt, ob die Abfolge der Ereignisse 8 ein bestimmtes Prüfkriterium erfüllt. Zum Beispiel wird eine registrierte Ereignisabfolge mit einem oder mehreren hinterlegten Ereignisabfolgen verglichen. Diese hinterlegten Abfolgen repräsentieren die Modulation der Zielstrahlung. Wird Übereinstimmung festgestellt, ist die Ereignisabfolge als von der Zielstrahlung 4 tatsächlich verursacht erkannt. Andernfalls sucht das Gerät 1 weiter oder gibt z.B. eine Fehlermeldung aus.

Als alternatives oder zusätzliches Prüfkriterium kann die Zugehörigkeit zu einer Klasse von Ereignissen getestet werden. Ein einfaches Beispiel einer solchen Klassifizierung ist die Prüfung, ob die Zeitabstände zwischen den Ereignissen 8 eine definierte Obergrenze oder eine bestimmte Mindestereignisfrequenz einhalten, welche im Beispiel die Zielstrahlungspulsrate repräsentiert. Ein Klassifizierungsmodell zur Klassifizierung von detektierten Ereignissen 8 als Zielstrahlung 4 oder Nicht-Zielstrahlung kann z.B. auch mittels machine learning gebildet werden, ausgehend davon, dass das Gerät 1 auf Zielstrahlung 4 und Nicht-Zielstrahlung trainiert wird. Ein selbstlernendes Klassifizierungsmodell bietet den Vorteil, dass auch neue, bisher dem Vermessungsgerät 1 unbekannte Zielstrahlungen 4 automatisch als solche erkannt werden können.

Mit einer solchen Zielstrahlungsidentifizierung lässt sich zum einen selbst Störlicht als solches erkennen, welches zwar veränderliche Intensität oberhalb des Schwellwerts aufweist und damit Ereignisse 8 auslöst, jedoch aufgrund seiner von der Zielstrahlungsmodulation unterschiedlichen Modulation nicht mit dem vorbekannten Prüfkriterium übereinstimmt.

Wie in Figur 3 dargestellt, lassen sich des weiteren damit auch unterschiedliche Ziele 3, 13 als solche erkennen. Die beiden Ziele 3 und 13 emittieren Zielstrahlung 4 und 14 mit unterschiedlicher Pulsrate. Entsprechend werden unterschiedlicher Ereignisfolgen 8 und 18 detektiert, so dass daraus -z.B. mittels einer gespeicherten Tabelle, in der einer jeden Ereignisabfolge ein Ziel 3, 13 zugeordnet istdie jeweilige Ereignisfolge 8, 18 und damit die zugrundeliegende Strahlung 4, 14 identifizierbar ist. Somit lassen sich z.B. mehrere Ziele 3, 13 in der Messumgebung parallel vermessen, ohne eine Verwechslung befürchten zu müssen.

Die Zielkamera 2 bzw. der Sensor 5 weisen in manchen Ausführungsformen ein grosses Sichtfeld auf, bis hin zu 180° oder mehr. Damit kann sich ein manuelles Grobausrichten auf ein Ziel 3, 13 oder ein automatisches Grobausrichten erübrigen, welches im Stand der Technik z.B. mittels einer gesonderten Overview-Kamera erfolgt und vor allem bei ATR-Kameras des Stands der Technik, die ein vergleichsweises enges Field of View von z.B. 10° oder weniger aufweisen, vonnöten ist. Ein erfindungsgemässes Vermessungsgerät kann also overview-kameralos ausgeführt sein.

Darüberhinaus wird identifizierbare Zielstrahlung 4, 14 optional genutzt, um die Orientierung oder Ausrichtung eines, z.B. handgehaltenen, Messhilfsinstruments, mit welchem Zielpunkte eines Objekts markiert werden, zu bestimmen. Ein Beispiel für ein handgehaltenes Messhilfsinstrument mit einer Messsonde oder einem Scanaufsatz, welches in Zusammenwirkung mit einem Lasertracker verwendet wird, ist in der WO 2007/124010 A2 beschrieben oder wird als "T-Probe" von Leica Geosystems AG vertrieben. Hierzu weist das Messhilfsinstrument mehrere Ziele 3, 13 auf, welche fix an definierten Stellen am Instrument angeordnet sind, z.B. in Form eines T oder X. Aufgrund der individuellen Zielstrahlung 4, 14, die jedes dieser fix zueinander angeordneten Ziele 3, 13 kann eine jede Detektionsstelle 4s, 14s auf dem Sensor 5 einem jeden Ziel 3, 13 zugeordnet werden (der übersichtlicheren Darstellung wegen ist in Figur 3 auf das das Pixel-Array symbolisierende Gittermuster beim Sensor 5 verzichtet). Aus der Relation der Positionen x4,y4 und x14,y14 auf dem Sensor kann in Kenntnis der Positionsrelationen der Ziele 3, 13 auf dem Messhilfsinstrument auf die Orientierung des Messhilfsinstruments relativ zur Kamera 2 geschlossen werden. Zusätzlich wird die detektierte Positionsrelation optional auch dergestalt ausgewertet, dass auf eine grobe Entfernung zum Messhilfsinstrument geschlossen werden kann.

Aufgrund der vergleichsweise hohen Messrate kann auch schnellen Dreh- oder Verschwenkbewegungen -also Ausrichtungsänderungen- eines solchen Messhilfsinstruments gut und robust gefolgt werden, so dass damit eine Vermessung eines Objekts, z.B. mittels eines als Lasertracker ausgebildeten Vermessungsgeräts 1 schneller als mit Geräten des Stands der Technik erfolgen kann.

Alternativ zu Zielen 3, 13, die unterschiedlich modulierte Zielstrahlung 4, 14 emittieren, erfolgt eine Erzeugung modulierter und ggf. auch unterschiedlicher Zielstrahlung 4, 14 bei reflektierenden Zielen 3, 13 z.B. indem dem Retroreflektor ein Shutter vorgeschaltet ist. Mit solchen Shuttern lässt sich eine vom Vermessungsgerät 1 kontinuierlich ausgestrahlte Zielstrahlung gezielt ein- und ausblenden (zeitlich gesteuertes Verschatten des Reflektors), so dass damit modulierte Zielstrahlung und mit verschieden getakteten Shuttern unterschiedliche Zielstrahlungen realisierbar sind.

Alternativ oder zusätzlich ist anstelle einer derartigen Intensitätsmodulation z.B. mittels verschwenkbarer Reflektoren oder mittels manuellem Verschwenken des Ziels 3, 13 (bzw. des das Ziel tragenden Vermessungsstabs) eine Modulation der Reflektionsrichtung erzeugbar. Dieses führt zu einer definierten Bewegung der Detektionsstelle, z.B. 4s, auf dem Sensor (oder bei sehr raschem Verschwenken auch zu einer Art Pulsung der Zielstrahlung), welche mit der damit einhergehenden pixelweisen Intensitätsänderung detektierbar ist. Eine derartige Richtungsänderung ist z.B. mittels sich alternierend bewegender oder rotierender Reflektoren möglich.

Figur 4 zeigt schematisch ein Beispiel für ein Erfassen eines sich bewegenden Ziels 3. Das Ziel bewegt sich relativ zum Vermessungsgerät 1, illustriert in der Figur durch die drei Standorte zu den drei Zeiten T1, T2 und T3. Zum Zeitpunkt T1 liegt dabei eine aufsteigende Flanke eines Pulses der Zielstrahlung 4 vor, zu der Zeit T2 eine absteigende Flanke und zu der Zeit T3 wieder eine aufsteigende Flanke. Diese drei Intensitätsänderungen werden vom Sensor 5 jeweils an Stellen 4s1, 4s2 und 4s3 des Pixel-Arrays registriert (im Beispiel wird der Einfachheit angenommen, dass die Kamera 2 bzw. das Gerät 1 der Bewegung des Ziels 3 nicht bzw. noch nicht folgt).

Aufgrund der hohen Messrate des Sensors 5, gepaart mit der Tatsache, dass auch absteigende Impulsflanken als Ereignis registriert werden, also einem jeweiligen Strahlungspuls zweimal Information entnommen wird, liegt somit ein hochdynamisches Abbild der Bewegung des Ziels 3 vor. Damit lassen sich Zielbewegungen sehr viel besser erfassen als mit Geräten des Stands der Technik, bei denen es bei sich sehr schnell bewegenden Zielen 3, vor allem im Nahbereich, oder bei unvermittelten Bewegungsänderungen zu einem Verlust der Zielerfassung kommt, da das Ziel 3 aufgrund der zu trägen Zielverfolgung aus dem Sichtfeld des Sensors 5 verschwindet.

Zum Beispiel können mittels des dynamischen Sensors 5 Geschwindigkeiten V1, V2, die die Bewegung beschreiben, rascher und präziser erfasst werden. Wie in der Figur 4 durch die unterschiedlichen Längen der Geschwindigkeitsvektoren V1, V2 symbolisiert, können somit auch (plötzliche) Bewegungsänderungen gut erfasst werden.

Das erfindungsgemässe System stellt also eine verbesserte, zeitlich höherauflösende Zielverfolgung (Tracking) bereit, mit dem auch sich Ziele 3, die sich relativ schnell bewegen oder plötzlich ihre Bewegung ändern, zuverlässig verfolgt werden können, weshalb zeitraubendes Wiederaufsuchen des Ziels 3 (erneutes Lock-in) entfällt.

Dies lässt sich noch weiter verbessern, indem Kameras 2 bzw. Sensoren 5 mit einem im Vergleich zu herkömmlichen Geräten ein relativ grosses Sichtfeld aufweisen, wie weiter oben bereits beschrieben. Weiter unterstützt kann ein Bestimmen der Zielbewegung bzw. des Verfolgens zudem dadurch werden, dass die oben beschrieben Entfernungsschätzung mittels des Sensors 5 mit berücksichtigt wird, also z.B. im Wissen, dass sich das Ziel 3 im Nahbereich befindet, von vorneherein von grösseren Verschieberaten auf dem Sensor 5 (höherer Winkelfrequenz der Richtungsänderung) ausgegangen wird. In Zusammenwirkung mit der hohen Messrate kann so erreicht werden, dass eine Nachführung der Anzielrichtung immer derart ausreichend erfolgt, dass selbst ein sich im Nahbereich rasch bewegendes Ziel 3 praktisch nie aus dem Field of View der Kamera 2 austritt und somit kein Verlust des Einlockens mehr vorkommt.

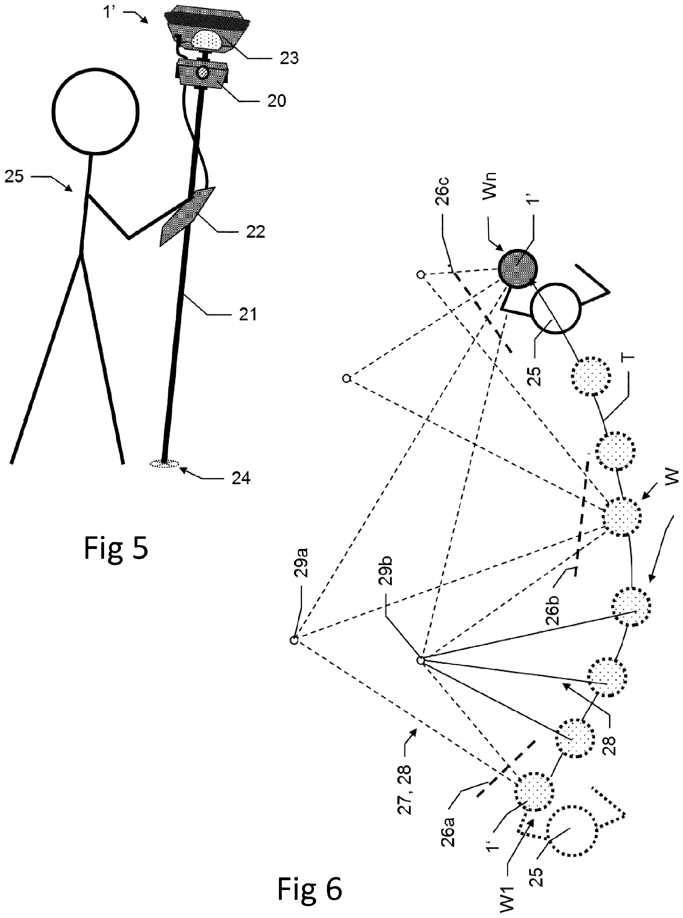

Figur 5 zeigt schematisch ein weiteres Vermessungsgerät 1', welches im Beispiel als Vermessungsstab mit GNSS-Modul 23 ausgebildet ist. Mit einem solchen von einem Benutzer 25 geführten Vermessungsstab 1' lassen sich in an sich bekannter Weise Messumgebungspunkte 24 vermessen bzw. abstecken, indem der Stab 21 entsprechend positioniert wird. Das Vermessungsgerät 1' weist neben dem GNSS-Modul 23 ein Kameramodul 20 auf. Dieses Kameramodul 20 weist neben einem Bildsensor zur Aufnahme herkömmlicher Bilder einen Dynamic Vision Sensor (DVS) auf, so dass damit auch Lichtintensitätsänderungen als Ereignisse detektierbar sind. Der GNSS-Pole 1' verfügt also wie die oben bereits vorgestellten Geräte über eine ereignisbasierte Kamera.

Alternativ zur genannten Ausbildung mit einem herkömmlichen Bildsensor und zusätzlichen DVS weist das Vermessungsgerät einen Dynamic Vision Sensor auf, welcher neben Ereignisdetektion auch Intensitätswerte erfassen kann (s.a. Beschreibung zu Figur 1), so dass mittels des DVS auch die Kamerabilder aufnehmbar sind. Der DVS fungiert dann also als dualer Sensor sowohl zur Ereignisdetektion als auch zum Fotografieren.

Diese ereignisbasierte Kamera bzw. die damit detektierten Ereignisse werden nun zusammen mit den parallel aufgenommenen Kamerabildern verwendet, um visuelle Odometrie durchzuführen, im Beispiel mittels der Rechnereinheit 22 des Vermessungsgeräts 1', in welcher hierfür ein entsprechender Visuelle-Odometrie-Algorithmus gespeichert ist. Mit anderen Worten werden mittels visueller Odometrie anhand der Kamerabilder und der Daten des DVS Posen des Kameramoduls 20 ermittelt, woraus Position und Orientierung des Vermessungsgeräts 1' bei Bewegung entlang eines Pfades bestimmbar sind. Damit lässt sich z.B. die Lagebestimmung (6-DoF) mittels GNSS unterstützen oder verfeinern oder eine Lagebestimmung auch an Orten durchführen, an denen kein GNSS-Empfang gegeben ist, z.B. in Tunneln oder Häuserschatten; dies aufgrund der ereignisbasierten Kamera 20 selbst bei schwierigen Lichtverhältnissen (z.B. sehr hell oder sehr dunkel) oder rascher Bewegung des Vermessungsgeräts 1'. Die so ermittelten Kameraposen werden also zur direkten Positions- und/oder Orientierungsbestimmung herangezogen, zur Genauigkeitsverbesserung und/oder zur interpolierenden Überbrückung bei der Verortung des Vermessungsgeräts 1'. Der Vorgang zur visuellen Odometrie wird anhand nachfolgender Figuren näher beschrieben.

Figur 6 zeigt in Vogelperspektive wie das Vermessungsgerät 1' entlang einer Trajektorie T von einem Startpunkt S zu einem Endpunkt E vom Benutzer 25 geführt wird. Am Startpunkt W1, am Endpunkt Wn sowie an einem weiteren Wegpunkt W wird jeweils mittels des Kameramoduls des Vermessungsstabs 1' ein Kamerabild 26, 26b, 26c aufgenommen. Mittels korrespondierender Punkte, von denen zwei 29a, 29b in der Figur bezeichnet sind, die in zumindest zwei der Bilder der Bilderserie 29a-29c vorkommen, sind mittels Rückwärtsschnitt, angedeutet durch die gestrichelten Linien 27, nach bekannten geometrischen Prinzipien, beispielsweise unter Verwendung eines SLAM-Algorithmus (Simultaneous Localization and Mapping) oder SfM-Algorithmus (Structure from Motion), prinzipiell die Kameraposen, die den Bildern 29a-29c zugrundeliegen, ermittelbar. Beispielsweise sind die beiden Punkte 29a, 29b solche Punkte, die in der Bilderserieuntergruppe 26a und 26b identifiziert sind. Zusätzliche korrespondierende Punkte zur Kameraposenbestimmung sind z.B. mittels Vorwärtseinschneiden erstellbar. Ein Nachteil solcher bildbasierter Verfahren ist, dass derartige Bildinformation nur bis zu einem bestimmten Grad robust prozessiert werden können angesichts begrenzter Rechenleistung eines derartigen mobilen Vermessungsgeräts 1'. Insbesondere schnelle (Dreh-)Bewegungen oder schnelle Szenenwechsel können zum Abbruch der Rekonstruktion der Trajektorie T führen.

Das dargestellte Bestimmen von Kameraorientierung und Kameraposition erfolgt deshalb nicht allein anhand der Kamerabilder 26a-26c, sondern unter zusätzlicher Heranziehung von Ereignissen, welche mittels des DVS des Vermessungsgeräts 1' detektiert sind. Als ein solches Ereignis wird z.B. die Verschiebung des Punkts 29b auf dem Pixel-Array des DVS detektiert, welche aufgrund der Bewegung des Vermessungsgeräts 1' hervorgerufen ist. Das "Wandern" des Punkts 29b und damit seine jeweilige Pixel-Position auf dem Sensor kann so verfolgt werden. Anhand dessen stehen zusätzliche Messdaten für Rückwärtsschnitt und Vorwärtseinschneiden zur Verfügung (angedeutet durch die Linien 28).

Die detektierten Ereignisse der ereignisbasierten Kamera dienen im Beispiel dazu, das Identifizieren korrespondierender Punkte 29a,b robuster zu gestalten oder das bildbasierte Bestimmen der Kameraposen zu verfeinern. Dies ist besonders vorteilhaft, wenn aufgrund ungünstiger Lichtverhältnisse oder schneller Trajektorie T, welche z.B. sog. high dynamic range effects oder motion blur verursachen, ein Auswerten der Bilder 26a-26c bzw. Ermitteln homologer Punkte 29a,b nur ungenau oder gar nicht möglich ist.

Wie in Figur 6 dargestellt, wird die hohe Ereignismessrate, die die ereignisbasierte Kamera bzw. der DVS besitzt (z.B. mehrere kHz) und die z.B. um den Faktor 100 grösser ist als die Rate, mit der Bilder 26a-26c aufgenommen werden, genutzt, um zwischen den Bildern 26a-26c korrespondierende Punkte 29a,b zu verfolgen bzw. zu finden. An Wegpunkten W zwischen den Bildaufnahmewegpunkten, von denen der besseren Übersicht halber nur einige wenige in der Figur 6 dargestellt sind, erfolgt also jeweils ein Detektieren von Ereignissen. Diese Ereignisse werden verwendet, um die dahinterliegenden Punkte 29a,b zu verfolgen bzw. fortlaufend zu identifizieren. Dies erleichtert oder verbessert u.a. deren Wiederauffinden bzw. Identifizieren in den Kamerabildern 26a-26c erheblich. Auch lassen sich damit Kameraposen für Wegpunkte W zwischen den einzelnen Bildern 26a-26c bestimmen. Die Detektion von Ereignissen kann optional auch genutzt werden, um ohne Einbussen bei der Lagebestimmung des Vermessungsgeräts 1' die Bilderserie im Vergleich zu herkömmlichen Geräten bzw. Verfahren zu verkleinern, also weniger Bilder aufzunehmen. Damit wird das Datenaufkommen vorteilhaft verringert, da Kamerabilder 26a-26c datenintensiv sind, ein DVS dagegen vergleichsweise wenig Daten produziert.

Optional wird im Rahmen der Vermessungsgerätfunktionalität zur visuellen Odometrie ein erstes Bild 26a der Bilderserie 26a-26c als Referenzbild aufgenommen, mit bekannter Pose in Bezug zur Messumgebung. D.h. das Bild 26a ist beispielsweise absolut referenziert (relativ zu einem absoluten Bezugssystem), so dass auch die anhand detektierter Ereignisse erstellten Punkte 29a, 29b als Referenzpunkte dienen. Ein Satz solcher Referenzpunkte oder ein Referenzpunktefeld dient dann zum Bestimmen einer absoluten Kamerapose von Folgebildern 26b, 26c.

Mit anderen Worten werden die Bilddaten der Bilder 26a-c analysiert im Hinblick auf korrespondierende Punkte, also Messumgebungspunkte, die in mehreren Bildern abgebildet sind. Dieser Punktesatz bildet ein Referenzpunktefeld, welches für weitere Kamerabilder 26b,c als Referenz dient, wodurch jedes weitere Bild 26b,c Referenzpunkte zur Referenzierung des Bilds 26b,c bezüglich aller vorherigen Bilder dienen. In jedem neuen Bild 26b,c werden dazu korrespondierende Bildpunkte mittels oder unter Heranziehung detektierter Ereignisse identifiziert für Umgebungspunkte des bereits vorhandenen Referenpunktefelds. Diese aufgefundenen Bildpunkte werden zusammen mit bereits ermittelten Koordinaten zugehöriger Punkte zur Bestimmung der Kamerapose des neuen Bilds 26b,c mittels Rückwärtsschnitt genutzt. Zudem werden im jeweiligen neuen Bild 26b,c wiederum korrespondierende Punkte identifiziert, basierend oder unterstützt durch Messdaten des DVS, welche zur Ermittlung zusätzlicher Punktkoordinaten mittels Vorwärtseinschnitt dienen, so dass das Referenzpunktefeld erweitert wird. Auch lassen sich mit einem solchen SLAM-Auswertung nicht nur Kameraposen ermitteln, sondern zudem eine 3D-Punktwolke (sparse point cloud) der Messumgebung erzeugen (die Positionen aller Referenzpunkte), wobei aufgrund der vergleichsweise hohen Messrate des DVS und leichteren Prozessierbarkeit seiner Messdaten eine dichtere Punktwolke als mit herkömmlichen Mitteln/Verfahren ohne zusätzliche Anforderungen an die Rechnerleistung erzeugbar ist.

Als weitere Option erfolgt z.B. als abschliessender Schritt ein Verfeinern des erzeugten Referenzpunktefelds und der ermittelten Kameraposen mittels Bündelausgleich, wobei der Bündelausgleich unter Heranziehung detektierter Ereignisse erfolgt. Mittels eines solchen Bündelausgleichs werden die Positionen und Orientierungen der Kameraposen und ggf. der im Zuge des Verfahrens ermittelten 3D-Punktkoordinaten optimiert, es erfolgt eine globale Optimierung, welche den Reprojektionsfehler in einem typischen SfM-Ansatz minimiert.

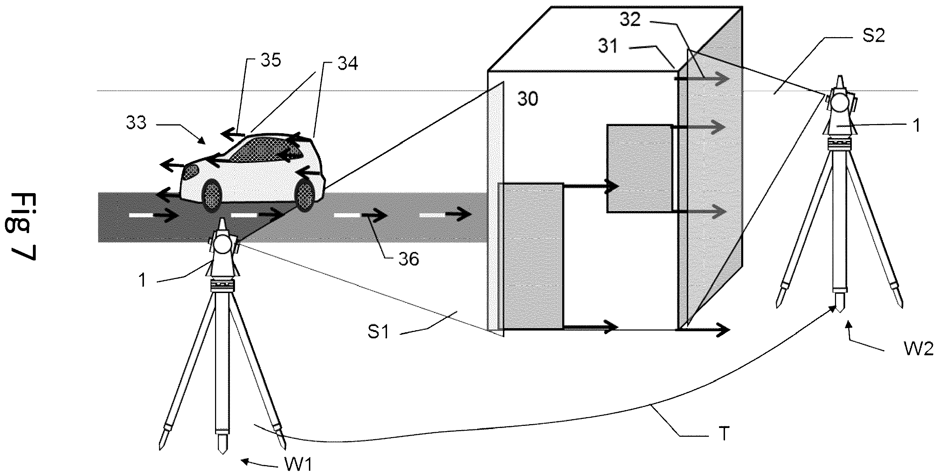

Figur 7 zeigt in einer schematischen Seitenansicht ein weiteres Anwendungsbeispiel für ein erfindungsgemässes Odometrie-Verfahren. Im Beispiel wird mittels eines Vermessungsgeräts 1, beispielsweise ausgebildet wie zu Figur 1 beschrieben, von einem ersten Standort W1 mittels eines Laserscans S1 eine erste 3D-Punktwolke von einem Teil der Messumgebung aufgenommen, im Beispiel eines ersten Teils des Gebäudes 30. Um weitere Teile des Gebäudes 30 zu scannen, vor allem solche, welche vom ersten Standort S1 nicht scannbar sind, wird das Vermessungsgerät 1 entlang des Weges T an einen zweiten Standort W2 transportiert, um von dort aus mittels eines zweiten Scans S2 eine weitere, zweite 3D-Punktwolke zu erstellen. Um das Gebäude 30 in einer einzigen 3D-Form darstellen zu können, müssen die beiden 3D-Punktwolken registriert werden, also in ein gemeinsames Koordinatensystem gesetzt werden.

Dies erfolgt im Beispiel nun, indem vom jeweiligen Standort W1, W2 neben dem Scan S1, S2 ein Kamerabild aufgenommen wird, welches sich jeweils mit dem Scan S1, S2 bzw. der ersten oder zweiten Punktwolke überlappt. Während der Bewegung T werden laufend Ereignisse mittels des Dynamic Vision Sensors des Vermessungsgeräts 1 detektiert. Anhand der Kamerabilder und der detektierten Ereignisse werden Kameraposen ermittelt und schliesslich wie gefordert Position und Orientierung der zweiten zur ersten 3D-Punktwolke. Die visuelle Odometrie unter Verwendung einer ereignisbasierten Kamera ermöglicht im Beispiel also die Ermittlung des Posenunterschieds zwischen zwei Scanstandorten W1, W2 und damit die Registrierung der beiden Punktwolken.

Das Bestimmen von Kameraposen bzw. Position und Orientierung erfolgt im Beispiel mittels Merkmalsverfolgung, z.B. der Merkmale 31, 34 und 36. Dieses feature tracking basiert entweder ausschliesslich auf detektierten Ereignissen oder die Ereignisse dienen zur Unterstützung der Verfolgung der Merkmale 31, 34, 36 in Kamerabildern einer Bilderserie, die mittels der Vermessungsgerätekamera während der Bewegung T aufgenommen werden, z.B. indem anhand der DVS-Messdaten ein Zielbereich in einem Folgebild zur Merkmalsauffindung vorab eng eingegrenzt werden kann. Hierbei können z.B. Matching-Algorithmen wie SIFT, SURF, BRISK oder BRIEF zur Anwendung kommen.

Die Verwendung einer ereignisbasierten Kamera ist für ein feature tracking vorteilhaft, u.a. aufgrund der hohen Messrate, aber auch weil damit solche Merkmale 31, 34, welche Ecken darstellen, besonders gut getrackt werden können. Ecken 31, 34 werden selbst aus unterschiedlichen Blickrichtungen heraus robust als Ereignisse detektiert, so dass diese sich besonders gut verfolgen lassen.

Auch lässt sich mit den DVS-Daten ein feature tracking auch bei raschen Relativbewegungen von Objektmerkmalen robust durchführen. Aufgrund der hohen Dynamik des DVS kann selbst schnelle Bewegungen des Vermessungsgeräts und damit der Kamera 1 bzw. "Bewegungen" von Merkmalen auf dem Sensor bzw. von Bild zu Bild gefolgt werden und führen nicht zu einem Verlust von Merkmalen und damit unzureichender oder unausführbarer Merkmalsverfolgung und damit letztlich der visuellen Odometrie. Auch lassen sich sonst problematische Bewegungen von Objekten 33 der Messumgebung selbst verarbeiten. Im Beispiel wird auch das fahrende Automobil 33 von der Kamera erfasst. Die Messdaten des DVS erlauben, diese Eigendynamik des Objekts 33 zu erkennen. Somit lassen sich zuverlässig Bewegungen 32 eines Merkmals 31, welches durch die Bewegung des Geräts 1 verursacht sind von solchen Bewegungen 35 unterscheiden, welche (zusätzlich) durch Bewegung eines Objekts 33 verursacht sind.

Optional werden solche Bewegungen 32 quantifiziert. In einem solchen Fall ist es besonders vorteilhaft, durch das Vermessungsgerät 1 verursachte Merkmals- oder Punktbewegungen von solchen zu unterscheiden, die durch Objektbewegungen hervorgerufen sind. Eine Bewegungsgrösse des Vermessungsgeräts 1 bzw. des Kameramoduls ist beispielsweise dessen Geschwindigkeit oder Beschleunigung, welche anhand detektierter Ereignisse ermittelt wird.

Als weitere Option verfügt das Vermessungsgerät 1 über einen thermischen Bildsensor, eine intertiale Messeinheit (IMU) oder einen elektronischen Distanzmesser. Diese Detektoren oder Messeinheiten werden dann eingesetzt, um das Bestimmen der Kameraposen weiter zu unterstützen. Mit deren Messdaten, beispielsweise eines thermografischen Umgebungsabbildes, Beschleunigungswerten oder Entfernungswerten, liegen zusätzliche Informationen über die Messumgebung vor, welche z.B. ein feature tracking noch robuster gestalten oder Zuordnungen zwischen Bildern oder detektierten Ereignissen erleichtern oder verifizierbar machen.

Zusammengefasst ist also Gegenstand der Erfindung gemäss eines ersten Aspekts
1. ein Vermessungsgerät (1), insbesondere ausgebildet als Totalstation, Theodolit oder Tachymeter oder Lasertracker, ausgebildet zur Bestimmung der Position eines Ziels (3, 13) mit Bezug zu einem inneren Koordinatensystem, mit einer Kamera (2) mit einem positionssensitiven Pixel-Array-Sensor (5) zum Empfang und zur Detektion von vom Ziel (3, 13) retro-reflektierter oder emittierter optischer Zielstrahlung (4), wobei anhand einer ermittelten Position der detektierten Zielstrahlung (4) auf dem Pixel-Array eine Richtung zum Ziel (3, 13) bestimmbar ist, dadurch gekennzeichnet, dass die Kamera (2) ausgebildet ist als ereignisbasierte Kamera (2), so dass für ein jeweiliges Pixel (4p) des Pixel-Arrays ein Ereignis (8, 8u, 8d) als eine, insbesondere einen definierten Schwellwert (9) übersteigende, Änderung (ΔI) empfangener Strahlungsintensität detektierbar ist,
2. ein Vermessungsgerät (1) nach Punkt 1, dadurch gekennzeichnet, dass das Vermessungsgerät (1) ausgebildet ist, anhand einer mittels des Sensors (5) ermittelten Phasendifferenz und/oder Laufzeit der detektierten Zielstrahlung (4) eine Entfernung zum Ziel (3, 13) zu bestimmen,
3. ein Vermessungsgerät (1) nach Punkt 1 oder 2, dadurch gekennzeichnet, dass das Vermessungsgerät (1) eine Identifizierungsfunktionalität aufweist, bei deren Ausführung das Ziel (3, 13) anhand eines Prüfkriteriums identifiziert wird, insbesondere indem eine Abfolge detektierter Ereignisse (8, 8u, 8d) auf Übereinstimmung mit einer hinterlegten Ereignisabfolge und/oder Zugehörigkeit zu einer Ereignisabfolgeklasse geprüft wird,
4. ein Vermessungsgerät (1) nach einem der vorherigen Punkte, dadurch gekennzeichnet, dass der Sensor (5)
   - für eine Ereignisdetektionsrate von wenigstens 1 kHz ausgebildet ist und/oder
   - ein Sichtfeld von mindestens 1,5°, insbesondere mindestens 180°, abdeckt und
5. ein Vermessungsgerät (1) nach einem der vorherigen Punkte, dadurch gekennzeichnet, dass das Vermessungsgerät aufweist
   - eine Basis (12),
   - eine Strahllenkeinheit (11) zur Emission einer Messstrahlung, insbesondere Laserstrahlung, und zum Empfang von zumindest einem Teil der am Ziel (3, 13) reflektierten Messstrahlung, wobei die Strahllenkeinheit (11) um zwei Achsen relativ zur Basis (12) motorisiert schwenkbar ist und
   - eine Feindistanzmesseinheit zur Distanzbestimmung zum Ziel (3, 13) vermittels der Messstrahlung,
   - eine Winkelmessfunktionalität zur Bestimmung einer Ausrichtung der Strahllenkeinheit (11) relativ zur Basis (12),
   so dass anhand der bestimmten Distanz und Ausrichtung eine Zielposition ermittelbar ist, wobei anhand der mittels des Sensors (5) bestimmten Richtung zum Ziel (3, 13) die Strahllenkeinheit (11) derart verschwenkbar ist, dass emittierte Messstrahlung auf das Ziel (3, 13) trifft, insbesondere wobei die Strahllenkeinheit (11) eine Zielstrahlungsquelle zur Emission der Zielstrahlung aufweist,
6. ein Verfahren zum Bestimmen einer Richtung zu einem Ziel (3, 13) mit
   - Empfangen von vom Ziel (3, 13) retro-reflektierter oder emittierter optischer Zielstrahlung (4) mit einer ereignisbasierten Kamera (2) eines Vermessungsgeräts (1), insbesondere wobei das Vermessungsgerät (1) ausgebildet ist als Totalstation, Theodolit oder Tachymeter oder Lasertracker, wobei die Kamera (2) einen positionssensitiven Sensor (5) mit einem Pixel-Array aufweist, und
   - Detektieren von Ereignissen (8, 8u, 8d) als, insbesondere einen definierten Schwellwert übersteigende, Änderungen (ΔI) empfangener Strahlungsintensität mittels des Pixel-Arrays,
7. ein Verfahren nach Punkt 6, gekennzeichnet durch
   - Identifizieren des Ziels (4) anhand von detektierten Ereignissen (8, 8u, 8d), welche von einer Modulation der Zielstrahlung (4) verursacht sind, und
   - Bestimmen der Richtung zum Ziel (3, 13) mittels Ermitteln einer Position (Δx, Δy, x4, y4, x14, y14) der detektierten Zielstrahlung (4) auf dem Pixel-Array, insbesondere wobei das Modulieren
      □ beim Emittieren der Zielstrahlung (4) erfolgt, insbesondere indem gepulste Zielstrahlung (4) erzeugt wird, und/oder
      □ beim Reflektieren der Zielstrahlung (4) durch das Ziel (3, 13) erfolgt, insbesondere und/oder zeitweises Unterbrechen des Reflektierens, im Speziellen mittels eines Shutters, und/oder
      □ durch Verändern der Zielstrahlungsrichtung erfolgt,
8. ein Verfahren nach Punkt 7, dadurch gekennzeichnet, dass im Rahmen des Verfahrens mittels fortwährendem Ermitteln der Richtung eine Zielverfolgung eines sich bewegenden Ziels (3, 13) und Verändern einer Ausrichtung der ereignisbasierten Kamera (2) basierend auf der ermittelten Richtung erfolgt, insbesondere wobei im Rahmen der Zielverfolgung ein Schätzen der Geschwindigkeit (V1, V2) des Ziels (3, 13) erfolgt,
9. ein Verfahren nach einem der Punkte 6 bis 8, dadurch gekennzeichnet, dass zum Identifizieren des Ziels (4) ein Überprüfen auf Übereinstimmen mit einer hinterlegten Ereignisabfolge und/oder Zugehörigkeit zu einer Ereignisabfolgeklasse erfolgt,
10. ein Verfahren nach einem der Punkte 6 bis 9, dadurch gekennzeichnet, dass mittels Bestimmen einer Phasendifferenz und/oder Laufzeit der vom Sensor (5) detektierten Zielstrahlung (4) eine Entfernung zum Ziel (3, 13) geschätzt wird,
11. ein Verfahren nach einem der Punkte 6 bis 10, dadurch gekennzeichnet, dass zum Bestimmen der Position (Δx, Δy, x4, y4, x14, y14) ein Bild wenigstens eines Zielstrahlung (4) repräsentierenden Lichtflecks erzeugt wird mittels
   - zeitlichem Integrieren detektierter Ereignisse (8, 8u, 8d) und
   - pixelweisem Erfassen der zeitlich integrierten detektierten Ereignisse (8, 8u, 8d) der Zielstrahlung (4),
   insbesondere wobei als Position (Δx, Δy, x4, y4, x14, y14) ein Zentrum des Lichtflecks bestimmt wird,
12. ein Verfahren nach einem der Punkte 6 bis 11, dadurch gekennzeichnet, dass im Rahmen des Verfahrens ein Bestimmen einer Ausrichtung eines mehrere, in fixer Positionsrelation zueinander angeordneter Ziele (3, 13) aufweisenden Messhilfsinstruments erfolgt, basierend auf den detektierten Positionen der jeweiligen Zielstrahlung der einzelnen Ziele (3, 13) des Messhilfsinstruments, und
13. ein Verfahren zum Bestimmen einer Richtung zu einem Ziel (3, 13) mit
   - Bewegen des Ziels (3, 13) gemäss eines vordefinierten Bewegungsmusters,
   - Empfangen von vom Ziel (3, 13) ausgehenden Lichts (4) mit einer ereignisbasierten Kamera (2) eines Vermessungsgeräts (1), insbesondere wobei das Vermessungsgerät (1) ausgebildet ist als Totalstation, Theodolit oder Tachymeter oder Lasertracker, wobei die Kamera (2) einen positionssensitiven Sensor (5) mit einem Pixel-Array aufweist,
   - Detektieren von Ereignissen (8, 8u, 8d) als, insbesondere einen definierten Schwellwert übersteigende, Änderungen (ΔI) empfangener Lichtintensität mittels des Pixel-Arrays,
   - Identifizieren des Ziels (3, 13) anhand von Ereignissen, welche durch das vordefinierte Bewegungsmuster des Ziels (3, 13) hervorgerufenen Lichtintensitätsänderungen entsprechen, und
   - Bestimmen der Richtung zum Ziel (3, 13) mittels Ermitteln einer Position (Δx, Δy, x4, y4, x14, y14) der detektierten Bewegungsmuster-Ereignisse (4) auf dem Pixel-Array.
   Gemäss eines zweiten Aspekts ist zudem zusammengefasst Gegenstand der vorliegenden Erfindung ein
14. mobiles Vermessungsgerät (1, 1') mit wenigstens einem Kameramodul (20) und einem Computer (22) mit Visueller-Odometrie-Funktionalität, bei deren Ausführung mittels eines gespeicherten, insbesondere SLAM- oder SfM-basierten, Algorithmus zur visuellen Odometrie ein Bestimmen von Kameraposen erfolgt mittels Auswertung einer während einer Bewegung des Vermessungsgeräts (1, 1') entlang eines Weges (T) in einer Messumgebung vom Kameramodul (20) in verschiedenen Kameraposen aufgenommenen Serie von Bildern (26a-26c), dadurch gekennzeichnet, dass
   - das Kameramodul (20) einen Dynamic Vision Sensor (5) aufweist, so dass für ein jeweiliges Pixel eines Pixel-Arrays des Dynamic Vision Sensors (5) ein Ereignis (8, 8u, 8d) als eine, insbesondere einen definierten Schwellwert übersteigende, Änderung (ΔI) empfangener Lichtintensität detektierbar ist, und
   - im Rahmen der Funktionalität während der Bewegung zusätzlich zur Aufnahme der Bilderserie (26a-26c) ein Detektieren von Ereignissen (8, 8u, 8d) und
   - mittels des Algorithmus das Bestimmen von Kameraposen unter Heranziehung detektierter Ereignisse (8, 8u, 8d) erfolgt,
15. ein Vermessungsgerät (1, 1') nach Punkt 14, dadurch gekennzeichnet, dass der Dynamic Vision Sensor (5) auch zur Aufnahme der Bilder (26a-26c) im Rahmen der Funktionalität ausgebildet und vorgesehen ist,
16. ein Vermessungsgerät (1, 1') nach Punkt 14 oder 15, dadurch gekennzeichnet, dass im Rahmen der Funktionalität mittels des Algorithmus basierend auf einer SLAM- oder SfM-Auswertung anhand detektierter Ereignisse ein Identifizieren einer Vielzahl korrespondierender Bildpunkte (29a, 29b) in jeweiligen Untergruppen der Bilderserie (26a-26c) und basierend auf Rückwärtsschnitt und Vorwärtseinschneiden (27, 28) anhand der jeweiligen korrespondierenden Bildpunkte (29a, 29b) das Bestimmen der Kameraposen erfolgt,
17. ein Vermessungsgerät (1, 1') nach einem der Punkte 14 bis 16, dadurch gekennzeichnet, das im Rahmen der Funktionalität
   - ein erstes Bild (26a) der Bilderserie (26a-26c) als Referenzbild aufgenommen wird, dessen Pose relativ zur/in Bezug auf die Messumgebung bekannt ist,
   - anhand detektierter Ereignisse (8, 8u, 8d) ein Satz von Referenzbildpunkten erstellt wird, welche im Referenzbild (26a) und wenigstens einem weiteren Bild (26b, 26c) der Bilderserie (26a-26c) vorkommen, und
   - das Bestimmen von Kameraposen relativ zur Messumgebung anhand der Satzes von Referenzbildpunkten erfolgt,
18. ein Vermessungsgerät (1, 1') nach einem der Punkte 14 bis 17, dadurch gekennzeichnet, dass im Rahmen der Funktionalität ein Bündelausgleich unter Heranziehung detektierter Ereignisse (8, 8u, 8d) erfolgt,
19. ein Vermessungsgerät (1, 1') nach einem der Punkte 14 bis 18, dadurch gekennzeichnet, dass im Rahmen der Funktionalität ein Verfolgen von Bildmerkmalen in Bildern der Bilderserie (26a-26c) erfolgt, wobei das Verfolgen von Bildmerkmalen (31, 34, 36) anhand detektierter Ereignisse (8, 8u, 8d) erfolgt,
20. ein Vermessungsgerät (1, 1') nach einem der Punkte 14 bis 19, dadurch gekennzeichnet, dass im Rahmen der Funktionalität anhand detektierter Ereignisse (8, 8u, 8d) eine Bewegungsgrösse des Kameramoduls (20) ermittelt wird,
21. ein Vermessungsgerät (1, 1') nach einem der Punkte 14 bis 20, dadurch gekennzeichnet, dass im Rahmen der Funktionalität ein Bestimmen einer Position und/oder Orientierung des Vermessungsgeräts (1, 1') basierend auf wenigstens einem Teil der Kameraposen erfolgt,
22. ein Vermessungsgerät (1, 1') nach einem der Punkte 14 bis 21, dadurch gekennzeichnet, dass im Rahmen der Funktionalität
   - ein Aufnehmen einer ersten 3D-Punktwolke, insbesondere mittels Scannen (S1), und wenigstens eines ersten Bildes der Bilderserie (26a-26c) an einem ersten Wegpunkt (W1) erfolgt, wobei die erste 3D-Punktwolke und das erste Bild (26a) wenigstens sich teilweise überlappende Ausschnitte der Messumgebung abbilden,
   - ein Aufnehmen einer zweiten 3D-Punktwolke und wenigstens eines zweiten Bildes der Bilderserie (26a-26c) an einem zweiten Wegpunkt (W2), wobei die zweite 3D-Punktwolke und das zweite Bild wenigstens sich teilweise überlappende Ausschnitte der Messumgebung abbilden,
   - ein Registrieren der ersten und der zweiten 3D-Punktwolke relativ zueinander anhand der bestimmten Kameraposen wenigstens des ersten und zweiten Bilds,
23. ein Vermessungsgerät (1, 1') nach einem der Punkt 14 bis 22, dadurch gekennzeichnet, dass das Vermessungsgerät (1, 1') einen thermischen Bildsensor, eine inertiale Messeinheit und/oder einen elektronischen Distanzmesser aufweist, und das Bestimmen von Kameraposen unter Heranziehung von Messdaten des thermischen Bildsensors, der inertialen Messeinheit und/oder des elektronischen Distanzmessers erfolgt,
24. ein Vermessungsgerät (1, 1') nach einem der Punkte 14 bis 23, dadurch gekennzeichnet, dass im Rahmen der Funktionalität das Aufnehmen der Bilder (26a-26c) mit einer Bildrate erfolgt und das Detektieren von Ereignissen (8, 8u, 8d) mit einer Detektionsrate erfolgt, welche mindestens 100mal so gross ist wie die Bildrate,
25. ein Vermessungsgerät (1, 1') nach einem der Punkte 14 bis 24, dadurch gekennzeichnet, dass das Vermessungsgerät (1, 1') ausgebildet ist als Laserscanner, Totalstation, Theodolit oder Tachymeter oder Lasertracker und/oder aufweist
   - eine Basis (12),
   - einer Strahllenkeinheit (11) zur Emission einer Messstrahlung, insbesondere Laserstrahlung, und zum Empfang von zumindest einem Teil der an einem Ziel (3, 13) reflektierten Messstrahlung, wobei die Strahllenkeinheit (11) um zwei Achsen relativ zur Basis (12) motorisiert schwenkbar ist und
   - einer Feindistanzmesseinheit zur Distanzbestimmung zum Ziel (3, 13) vermittels der Messstrahlung,
   - einer Winkelmessfunktionalität zur Bestimmung einer Ausrichtung der Strahllenkeinheit (11) relativ zur Basis (12),
   so dass anhand der bestimmten Distanz und Ausrichtung eine Zielposition ermittelbar ist,
   insbesondere wobei das Vermessungsgerät (1, 1') ausgebildet ist zur Ausführung des Verfahrens nach Punkt 6, und
26. ein Vermessungsgerät (1, 1') nach einem der Punkte 14 bis 25, dadurch gekennzeichnet, dass das Vermessungsgerät (1, 1') ausgebildet ist als Vermessungsstab (1'), insbesondere mit GNSS-Empfänger, sowie
27. ein Verfahren zur visuellen Odometrie mit einem mobilen Vermessungsgerät (1, 1'), insbesondere einem Laserscanner, Totalstation, Theodolit oder Tachymeter, Lasertracker oder Vermessungsstab, mit
   - Bewegen des Vermessungsgeräts (1, 1') entlang eines Weges (T),
   - Aufnehmen einer Serie von Bildern (26a-26c) mittels eines Kameramoduls (20) des Vermessungsgeräts (1, 1') während der Bewegung in verschiedenen Kameraposen,
   - Bestimmen wenigstens eines Teils der Kameraposen anhand wenigstens eines Teils der Bilder der Bilderserie (26a-26c),
   gekennzeichnet durch
   - Detektieren von Ereignissen (8, 8u, 8d) mittels eines Dynamic Vision Sensors (5) des Vermessungsgeräts (1, 1'), wobei ein Ereignis (8, 8u, 8d) eine, insbesondere einen definierten Schwellwert übersteigende, Änderung (ΔI) mittels des Dynamic Vision Sensors (5) empfangener Lichtintensität ist,
   - Heranziehen wenigstens eines Teils der detektierten Ereignisse (8, 8u, 8d) zum Bestimmen der Kameraposen.

Es versteht sich, dass diese dargestellten Figuren nur mögliche Ausführungsbeispiele schematisch darstellen. Die verschiedenen Ansätze können erfindungsgemäss ebenso miteinander sowie mit entsprechenden Vorrichtungen und Verfahren des Stands der Technik kombiniert werden.

## Patentansprüche

1. Vermessungsgerät (1), insbesondere ausgebildet als Totalstation, Theodolit oder Tachymeter oder Lasertracker, ausgebildet zur Bestimmung der Position eines Ziels (3, 13) mit Bezug zu einem inneren Koordinatensystem, mit einer Kamera (2) mit einem positionssensitiven Pixel-Array-Sensor (5) zum Empfang und zur Detektion von vom Ziel (3, 13) retro-reflektierter oder emittierter optischer Zielstrahlung (4), wobei anhand einer ermittelten Position der detektierten Zielstrahlung (4) auf dem Pixel-Array eine Richtung zum Ziel (3, 13) bestimmbar ist,
**dadurch gekennzeichnet, dass**
die Kamera (2) ausgebildet ist als ereignisbasierte Kamera (2), so dass für ein jeweiliges Pixel (4p) des Pixel-Arrays ein Ereignis (8, 8u, 8d) als eine, insbesondere einen definierten Schwellwert (9) übersteigende, Änderung (ΔI) empfangener Strahlungsintensität detektierbar ist.

2. Vermessungsgerät (1) nach Anspruch 1,
**dadurch gekennzeichnet, dass**
das Vermessungsgerät (1)
• eine Identifizierungsfunktionalität aufweist, bei deren Ausführung das Ziel (3, 13) anhand eines Prüfkriteriums identifiziert wird, insbesondere indem eine Abfolge detektierter Ereignisse (8, 8u, 8d) auf Übereinstimmung mit einer hinterlegten Ereignisabfolge und/oder Zugehörigkeit zu einer Ereignisabfolgeklasse geprüft wird, und/oder
• ausgebildet ist, anhand einer mittels des Sensors (5) ermittelten Phasendifferenz und/oder Laufzeit der detektierten Zielstrahlung (4) eine Entfernung zum Ziel (3, 13) zu bestimmen.

3. Vermessungsgerät (1) nach einem der vorherigen Ansprüche,
**dadurch gekennzeichnet, dass**
der Sensor (5)
• für eine Ereignisdetektionsrate von wenigstens 1 kHz ausgebildet ist und/oder
• ein Sichtfeld von mindestens 1,5°, insbesondere mindestens 180°, abdeckt,
und/oder
das Vermessungsgerät aufweist
• eine Basis (12),
• eine Strahllenkeinheit (11) zur Emission einer Messstrahlung, insbesondere Laserstrahlung, und zum Empfang von zumindest einem Teil der am Ziel (3, 13) reflektierten Messstrahlung, wobei die Strahllenkeinheit (11) um zwei Achsen relativ zur Basis (12) motorisiert schwenkbar ist und
• eine Feindistanzmesseinheit zur Distanzbestimmung zum Ziel (3, 13) vermittels der Messstrahlung,
• eine Winkelmessfunktionalität zur Bestimmung einer Ausrichtung der Strahllenkeinheit (11) relativ zur Basis (12),
so dass anhand der bestimmten Distanz und Ausrichtung eine Zielposition ermittelbar ist, wobei anhand der mittels des Sensors (5) bestimmten Richtung zum Ziel (3, 13) die Strahllenkeinheit (11) derart verschwenkbar ist, dass emittierte Messstrahlung auf das Ziel (3, 13) trifft, insbesondere wobei die Strahllenkeinheit (11) eine Zielstrahlungsquelle zur Emission der Zielstrahlung aufweist.

4. Verfahren zum Bestimmen einer Richtung zu einem Ziel (3, 13) mit
• Empfangen von vom Ziel (3, 13) retro-reflektierter oder emittierter optischer Zielstrahlung (4) mit einer ereignisbasierten Kamera (2) eines Vermessungsgeräts (1), insbesondere wobei das Vermessungsgerät (1) ausgebildet ist als Totalstation, Theodolit oder Tachymeter oder Lasertracker, wobei die Kamera (2) einen positionssensitiven Sensor (5) mit einem Pixel-Array aufweist, und
• Detektieren von Ereignissen (8, 8u, 8d) als, insbesondere einen definierten Schwellwert übersteigende, Änderungen (ΔI) empfangener Strahlungsintensität mittels des Pixel-Arrays.

5. Verfahren nach Anspruch 4,
**gekennzeichnet durch**
• Identifizieren des Ziels (4) anhand von detektierten Ereignissen (8, 8u, 8d), welche von einer Modulation der Zielstrahlung (4) verursacht sind, und
• Bestimmen der Richtung zum Ziel (3, 13) mittels Ermitteln einer Position (Δx, Δy, x4, y4, x14, y14) der detektierten Zielstrahlung (4) auf dem Pixel-Array, insbesondere wobei das Modulieren
□ beim Emittieren der Zielstrahlung (4) erfolgt, insbesondere indem gepulste Zielstrahlung (4) erzeugt wird, und/oder
□ beim Reflektieren der Zielstrahlung (4) **durch** das Ziel (3, 13) erfolgt, insbesondere und/oder zeitweises Unterbrechen des Reflektierens, im Speziellen mittels eines Shutters, und/oder
□ **durch** Verändern der Zielstrahlungsrichtung erfolgt, insbesondere wobei
im Rahmen des Verfahrens mittels fortwährendem Ermitteln der Richtung eine Zielverfolgung eines sich bewegenden Ziels (3, 13) und Verändern einer Ausrichtung der ereignisbasierten Kamera (2) basierend auf der ermittelten Richtung erfolgt, insbesondere wobei im Rahmen der Zielverfolgung ein Schätzen der Geschwindigkeit (V1, V2) des Ziels (3, 13) erfolgt, und/oder
Überprüfen auf Übereinstimmen mit einer hinterlegten Ereignisabfolge und/oder Zugehörigkeit zu einer Ereignisabfolgeklasse zum Identifizieren des Ziels (4).

6. Verfahren nach einem der Ansprüche 4 oder 5,
**dadurch gekennzeichnet, dass**
mittels Bestimmen einer Phasendifferenz und/oder Laufzeit der vom Sensor (5) detektierten Zielstrahlung (4) eine Entfernung zum Ziel (3, 13) bestimmt wird und/oder
zum Bestimmen der Position (Δx, Δy, x4, y4, x14, y14) ein Bild wenigstens eines Zielstrahlung (4) repräsentierenden Lichtflecks erzeugt wird mittels
• zeitlichem Integrieren detektierter Ereignisse (8, 8u, 8d) und
• pixelweisem Erfassen der zeitlich integrierten detektierten Ereignisse (8, 8u, 8d) der Zielstrahlung (4),
insbesondere wobei als Position (Δx, Δy, x4, y4, x14, y14) ein Zentrum des Lichtflecks bestimmt wird, und/oder
im Rahmen des Verfahrens ein Bestimmen einer Ausrichtung eines mehrere, in fixer Positionsrelation zueinander angeordneter Ziele (3, 13) aufweisenden Messhilfsinstruments erfolgt, basierend auf den detektierten Positionen der jeweiligen Zielstrahlung der einzelnen Ziele (3, 13) des Messhilfsinstruments.

7. Verfahren zum Bestimmen einer Richtung zu einem Ziel (3, 13) mit
• Bewegen des Ziels (3, 13) gemäss eines vordefinierten Bewegungsmusters,
• Empfangen von vom Ziel (3, 13) ausgehenden Lichts (4) mit einer ereignisbasierten Kamera (2) eines Vermessungsgeräts (1), insbesondere wobei das Vermessungsgerät (1) ausgebildet ist als Totalstation, Theodolit oder Tachymeter oder Lasertracker, wobei die Kamera (2) einen positionssensitiven Sensor (5) mit einem Pixel-Array aufweist,
• Detektieren von Ereignissen (8, 8u, 8d) als, insbesondere einen definierten Schwellwert übersteigende, Änderungen (ΔI) empfangener Lichtintensität mittels des Pixel-Arrays,
• Identifizieren des Ziels (3, 13) anhand von Ereignissen, welche durch das vordefinierte Bewegungsmuster des Ziels (3, 13) hervorgerufenen Lichtintensitätsänderungen entsprechen, und
• Bestimmen der Richtung zum Ziel (3, 13) mittels Ermitteln einer Position (Δx, Δy, x4, y4, x14, y14) der detektierten Bewegungsmuster-Ereignisse (4) auf dem Pixel-Array.

8. Mobiles Vermessungsgerät (1, 1') mit wenigstens einem Kameramodul (20) und einem Computer (22) mit Visueller-Odometrie-Funktionalität, bei deren Ausführung mittels eines gespeicherten, insbesondere SLAM- oder SfMbasierten, Algorithmus zur visuellen Odometrie ein Bestimmen von Kameraposen erfolgt mittels Auswertung einer während einer Bewegung des Vermessungsgeräts (1, 1') entlang eines Weges (T) in einer Messumgebung vom Kameramodul (20) in verschiedenen Kameraposen aufgenommenen Serie von Bildern (26a-26c),
**dadurch gekennzeichnet, dass**
• das Kameramodul (20) einen Dynamic Vision Sensor (5) aufweist, so dass für ein jeweiliges Pixel eines Pixel-Arrays des Dynamic Vision Sensors (5) ein Ereignis (8, 8u, 8d) als eine, insbesondere einen definierten Schwellwert übersteigende, Änderung (ΔI) empfangener Lichtintensität detektierbar ist, und
• im Rahmen der Funktionalität während der Bewegung zusätzlich zur Aufnahme der Bilderserie (26a-26c) ein Detektieren von Ereignissen (8, 8u, 8d) und
• mittels des Algorithmus das Bestimmen von Kameraposen unter Heranziehung detektierter Ereignisse (8, 8u, 8d) erfolgt.

9. Vermessungsgerät (1, 1') nach Anspruch 8,
**dadurch gekennzeichnet, dass**
der Dynamic Vision Sensor (5) auch zur Aufnahme der Bilder (26a-26c) im Rahmen der Funktionalität ausgebildet und vorgesehen ist,
und/oder
im Rahmen der Funktionalität mittels des Algorithmus basierend auf einer SLAM- oder SfM-Auswertung anhand detektierter Ereignisse ein Identifizieren einer Vielzahl korrespondierender Bildpunkte (29a, 29b) in jeweiligen Untergruppen der Bilderserie (26a-26c) und basierend auf Rückwärtsschnitt und Vorwärtseinschneiden (27, 28) anhand der jeweiligen korrespondierenden Bildpunkte (29a, 29b) das Bestimmen der Kameraposen erfolgt,
und/oder
im Rahmen der Funktionalität
• ein erstes Bild (26a) der Bilderserie (26a-26c) als Referenzbild aufgenommen wird, dessen Pose relativ zur/in Bezug auf die Messumgebung bekannt ist,
• anhand detektierter Ereignisse (8, 8u, 8d) ein Satz von Referenzbildpunkten erstellt wird, welche im Referenzbild (26a) und wenigstens einem weiteren Bild (26b, 26c) der Bilderserie (26a-26c) vorkommen, und
• das Bestimmen von Kameraposen relativ zur Messumgebung anhand des Satzes von Referenzbildpunkten erfolgt.

10. Vermessungsgerät (1, 1') nach einem der Ansprüche 8 oder 9,
**dadurch gekennzeichnet, dass**
im Rahmen der Funktionalität
• ein Bündelausgleich unter Heranziehung detektierter Ereignisse (8, 8u, 8d) erfolgt und/oder
• ein Verfolgen von Bildmerkmalen in Bildern der Bilderserie (26a-26c) erfolgt, wobei das Verfolgen von Bildmerkmalen (31, 34, 36) anhand detektierter Ereignisse (8, 8u, 8d) erfolgt.

11. Vermessungsgerät (1, 1') nach einem der Ansprüche 8 bis 10,
**dadurch gekennzeichnet, dass**
im Rahmen der Funktionalität
• anhand detektierter Ereignisse (8, 8u, 8d) eine Bewegungsgrösse des Kameramoduls (20) ermittelt wird, und/oder
• ein Bestimmen einer Position und/oder Orientierung des Vermessungsgeräts (1, 1') basierend auf wenigstens einem Teil der Kameraposen erfolgt, und/oder
im Rahmen der Funktionalität
• ein Aufnehmen einer ersten 3D-Punktwolke, insbesondere mittels Scannen (S1), und wenigstens eines ersten Bildes der Bilderserie (26a-26c) an einem ersten Wegpunkt (W1) erfolgt, wobei die erste 3D-Punktwolke und das erste Bild (26a) wenigstens sich teilweise überlappende Ausschnitte der Messumgebung abbilden, sowie
• ein Aufnehmen einer zweiten 3D-Punktwolke und wenigstens eines zweiten Bildes der Bilderserie (26a-26c) an einem zweiten Wegpunkt (W2), wobei die zweite 3D-Punktwolke und das zweite Bild wenigstens sich teilweise überlappende Ausschnitte der Messumgebung abbilden, und
• ein Registrieren der ersten und der zweiten 3D-Punktwolke relativ zueinander anhand der bestimmten Kameraposen wenigstens des ersten und zweiten Bilds.

12. Vermessungsgerät (1, 1') nach einem der Ansprüche 8 bis 11,
**dadurch gekennzeichnet, dass**
im Rahmen der Funktionalität das Aufnehmen der Bilder (26a-26c) mit einer Bildrate erfolgt und das Detektieren von Ereignissen (8, 8u, 8d) mit einer Detektionsrate erfolgt, welche mindestens 100mal so gross ist wie die Bildrate
und/oder
das Vermessungsgerät (1, 1') einen thermischen Bildsensor, eine inertiale Messeinheit und/oder einen elektronischen Distanzmesser aufweist, und das Bestimmen von Kameraposen unter Heranziehung von Messdaten des thermischen Bildsensors, der inertialen Messeinheit und/oder des elektronischen Distanzmessers erfolgt.

13. Vermessungsgerät (1, 1') nach einem der Ansprüche 8 bis 12,
**dadurch gekennzeichnet, dass**
das Vermessungsgerät (1, 1') ausgebildet ist als Laserscanner, Totalstation, Theodolit oder Tachymeter oder Lasertracker und/oder aufweist
• eine Basis (12),
• einer Strahllenkeinheit (11) zur Emission einer Messstrahlung, insbesondere Laserstrahlung, und zum Empfang von zumindest einem Teil der an einem Ziel (3, 13) reflektierten Messstrahlung, wobei die Strahllenkeinheit (11) um zwei Achsen relativ zur Basis (12) motorisiert schwenkbar ist und
• einer Feindistanzmesseinheit zur Distanzbestimmung zum Ziel (3, 13) vermittels der Messstrahlung,
• einer Winkelmessfunktionalität zur Bestimmung einer Ausrichtung der Strahllenkeinheit (11) relativ zur Basis (12),
so dass anhand der bestimmten Distanz und Ausrichtung eine Zielposition ermittelbar ist,
insbesondere wobei das Vermessungsgerät (1, 1') ausgebildet ist zur Ausführung des Verfahrens nach Anspruch 6,
und/oder
das Vermessungsgerät (1, 1') ausgebildet ist als Vermessungsstab (1'), insbesondere mit GNSS-Empfänger.

14. Verfahren zur visuellen Odometrie mit einem mobilen Vermessungsgerät (1, 1'), insbesondere einem Laserscanner, Totalstation, Theodolit oder Tachymeter, Lasertracker oder Vermessungsstab, mit
• Bewegen des Vermessungsgeräts (1, 1') entlang eines Weges (T),
• Aufnehmen einer Serie von Bildern (26a-26c) mittels eines Kameramoduls (20) des Vermessungsgeräts (1, 1') während der Bewegung in verschiedenen Kameraposen,
• Bestimmen wenigstens eines Teils der Kameraposen anhand wenigstens eines Teils der Bilder der Bilderserie (26a-26c),
**gekennzeichnet durch**
• Detektieren von Ereignissen (8, 8u, 8d) mittels eines Dynamic Vision Sensors (5) des Vermessungsgeräts (1, 1'), wobei ein Ereignis (8, 8u, 8d) eine, insbesondere einen definierten Schwellwert übersteigende, Änderung (ΔI) mittels des Dynamic Vision Sensors (5) empfangener Lichtintensität ist,
• Heranziehen wenigstens eines Teils der detektierten Ereignisse (8, 8u, 8d) zum Bestimmen der Kameraposen.

15. Computerprogrammprodukt mit Programmcode, der auf einem maschinenlesbaren Träger, insbesondere eines Vermessungsgeräts nach Anspruch 1 oder 8, gespeichert ist, oder Computer-Daten-Signal zur Durchführung des Verfahrens nach Anspruch 4, 7 oder 14.
